# EUROPÄISCHE PATENTSCHRIFT

(11) **EP 2 349 639 B1**
(45) Veröffentlichungstag und Bekanntmachung des Hinweises auf die Patenterteilung: **29.08.2012**
(21) Anmeldenummer: 09740890.0
(22) Anmeldetag: 26.10.2009
(51) Int. Cl.: B23Q 39/02, B23Q 15/16, B23Q 5/26

(54) **WERKZEUGMASCHINE MIT SCHWIMMEND GELAGERTER TRÄGEREINRICHTUNG**
MACHINE TOOL WITH FLOATING SUPPORT DEVICE
MACHINE-OUTIL DOTÉE D'UN DISPOSITIF PORTEUR MONTÉ FLOTTANT

(30) Priorität: 12.11.2008 DE 102008058161
(43) Veröffentlichungstag der Anmeldung: 03.08.2011
(73) Patentinhaber: MAG IAS GmbH, 73033 Göppingen (DE)
(72) Erfinder: WINCKLER, Friedrich, 73527 Schwäbisch Gmünd (DE)
(74) Vertreter: Hoeger, Stellrecht & Partner Patentanwälte
(86) Internationale Anmeldenummer: PCT/EP2009/064095
(87) Internationale Veröffentlichungsnummer: WO 2010/054925

(56) Entgegenhaltungen:
- WO-A2-2005/077593
- US-A- 4 611 934
- US-A1- 2003 061 921

## Beschreibung

Die Erfindung betrifft eine Werkzeugmaschine, umfassend ein Maschinengestell, mindestens eine Trägereinrichtung für ein Werkzeug oder ein Werkstück, durch die ein wirkendes Werkzeug oder ein Werkstück, auf das mit einem Werkzeug eingewirkt wird, bei der Werkstückbearbeitung gehalten wird, und eine Halteeinrichtung, welche die mindestens eine Trägereinrichtung gegenüber dem Maschinengestell fest oder beweglich hält.

Die Erfindung betrifft ferner ein Verfahren zur Kompensation von Abweichungen einer Werkzeuglänge von einem Referenzwert.

Die Halteeinrichtung ist beispielsweise ein Schlitten, welcher an oder relativ zu dem Maschinengestell linear verschieblich geführt ist.

Die Trägereinrichtung ist beispielsweise eine Werkzeugspindel oder eine Werkstückspindel.

Aus der EP 0 614 724 B1 ist eine Werkzeugmaschine bekannt, bei welcher ein an einem Maschinengestell angeordneter Werkzeugträger (Werkzeug-Trägereinrichtung) über Schlitten längs einer ersten Achse und längs einer quer zur ersten Achse verlaufenden Achse verfahrbar ist. Ein Werkstückträger (Werkstück-Trägereinrichtung) ist auf einem in der dritten Achse quer zur ersten und zweiten Richtung verfahrbaren Schlitten gehalten.

Aus der WO 2005/077593 A2 ist eine Werkzeugmaschine mit mindestens einem beweglichen Schlitten, welcher eine Mehrzahl von Haltern für Werkzeuge und/oder Werkstücke aufweist, bekannt. Der mindestens eine Schlitten weist eine Mehrzahl von getrennten Teilschlitten auf. Die relative Lage der Teilschlitten ist zueinander feststellbar einstellbar.

In der nicht vorveröffentlichten WO 2009/034034 A1 ist eine Werkzeugmaschine beschrieben.

Aus der DE 10 2006 028 972 A1 ist eine Spindeleinheit mit einer in einem eigenen Lagergehäuse um ihre Längsachse drehbar gelagerten Arbeitsspindel bekannt, in der eine Aufnahme für Werkzeuge zur Bearbeitung von Werkstücken vorgesehen ist. Es ist eine Verstelleinheit vorgesehen, um die Arbeitsspindel im Betrieb gegenüber dem Lagergehäuse automatisch und ansteuerbar zu verstellen.

Aus der DE 34 22 000 A1 ist eine druckmittelbetätigte Spannvorrichtung zum Spannen von Werkzeugen oder Werkstücken, insbesondere zum axialen Spannen von auf einer Welle angeordneten Werkzeugen oder Werkstücken, beispielsweise von Schleifscheiben, Fräsern oder dergleichen, mit einem schwimmend gelagerten Ringkolben bekannt, der stirnseitig an der Vorrichtung angeordnet und über ein Druckmedium axial verstellbar ist. Der Ringkolben ist in Löserichtung der Spannvorrichtung federbelastet.

Aus der DE 103 29 402 A1 ist eine Werkzeugmaschine zur insbesondere synchronen, spanenden Bearbeitung von Werkstücken mit zwei oder mehreren, parallel nebeneinander in einer Bearbeitungseinheit angeordneten Spindeleinheiten zur Aufnahme von Werkzeugen bekannt. Es sind Verstelleinrichtungen zur Feineinstellung der Position der Spindeleinheiten zueinander vorgesehen. Die Verstelleinrichtungen bestehen aus einer um eine zentrale Achse drehbaren und arretierbaren Exzenterbüchse, in der die Spindeleinheiten achsparallel zur zentralen Achse exzentrisch gelagert sind.

Aus der DE 198 59 360 A1 ist eine Werkzeugmaschine zur insbesondere spanenden Bearbeitung von Werkstücken, mit einer Bearbeitungseinheit und/oder einem Werkstücktisch und mit einer Positionskorrektureinrichtung für die Bearbeitungseinheit bzw. den Werkstücktisch bekannt. Als Positionskorrektureinrichtung ist mindestens ein elektrisch angesteuertes piezoelektrisches Stellelement vorgesehen.

Aus der DE 36 23 112 C2 ist eine Spindel-Mutter-Verbindungsvorrichtung mit einer drehbar gelagerten Vorschubspindel, einer mit der Vorschubspindel im Eingriff stehenden Kugelmuttervorrichtung, die an einem verschiebbaren Tisch gelagert ist und infolge einer Drehung der Vorschubspindel entlang dieser axial verschiebbar ist, und mit einer Ausgleichseinrichtung bekannt.

Aus der US 2003/0061921 A1 ist eine Kompensationsvorrichtung für eine Hauptwelle eines Schneidwerkzeugs bekannt, wobei die Hauptwelle einen Dorn umfasst, ein Schneidwerkzeug an einem Vorderende mit dem Dorn verbunden ist, ein Motorrotor mit dem Dorn verbunden ist, um diesen zu rotieren, und wobei der Dorn eine kleinamplitudige lineare Verschiebung relativ zu einem Hauptkörper durchführen kann. Es ist ein magnetisches Element an einem Ende des Dorns fixiert, welches synchron mit diesem rotiert. Ein elektromagnetisches Element ist in einem Inneren des Hauptkörpers angeordnet und korrespondiert mit dem magnetischen Element.

Der Erfindung liegt die Aufgabe zugrunde, eine Werkzeugmaschine der eingangs genannten Art bereitzustellen, durch welche eine Feineinstellung der Position der mindestens einen Trägereinrichtung an der Halteeinrichtung ermöglicht ist.

Diese Aufgabe wird bei der eingangs genannten Werkzeugmaschine erfindungsgemäß dadurch gelöst, dass eine Lagereinrichtung vorgesehen ist, durch welche die mindestens eine Trägereinrichtung an der Halteeinrichtung schwimmend gelagert ist, wobei die Trägereinrichtung über die schwimmende Lagerung an der Halteeinrichtung aufgehängt ist, mit einer Verschieblichkeit in einer Verschiebungsrichtung längs eines Verschiebungswegs, und dass eine Verstelleinrichtung vorgesehen ist, durch welche die Position der mindestens einen Trägereinrichtung längs des Verschiebungswegs einstellbar und feststellbar ist.

Durch die schwimmende Lagerung der mindestens einen Trägereinrichtung an der Halteeinrichtung lässt sich die Position der Trägereinrichtung an der Halteeinrichtung auf dem Verschiebungsweg variieren. Dadurch ist beispielsweise eine Werkzeuglängenkompensation möglich, wenn die Trägereinrichtung eine Werkzeug-Trägereinrichtung ist. Es lassen sich so unterschiedliche Werkzeuglängen und auch Toleranzen ausgleichen.

Es ist beispielsweise möglich, auf dem Verschiebungsweg einen Hub im Bereich von ± 1 mm oder ± 0,5 mm mit einer Genauigkeit von ± 1/100 mm oder besser zu erreichen.

Die Trägereinrichtung lässt sich über die schwimmende Lagerung der Lagereinrichtung an der Halteeinrichtung aufhängen. Dadurch ist für die Verschieblichkeit keine Schmierung notwendig, da keine Gleitführung oder Walzführung vorgesehen werden muss.

Über die Verstelleinrichtung lässt sich die Position der Trägereinrichtung zu der Halteeinrichtung mit hoher Genauigkeit einstellen und festlegen. Die Nachgiebigkeit der Position der Trägereinrichtung an der Halteeinrichtung auf dem Verschiebungsweg wird über die Verstelleinrichtung festgelegt.

Die Verstelleinrichtung zur Stellbewegung und Stellpositionierung kann auf unterschiedliche Arten ausgebildet sein. Grundsätzlich sollte sie eine Einrichtung umfassen, welche an der mindestens einen Trägereinrichtung fixierbar ist, und eine Einrichtung umfassen, welche an der Halteeinrichtung fixierbar ist, wobei die relative Position dieser beiden Einrichtungen einstellbar ist. Beispielsweise ist die Verstelleinrichtung pneumatisch oder hydraulisch ausgebildet. Auch andere Möglichkeiten wie beispielsweise ein Kugelgewindetrieb usw. sind möglich.

Durch die erfindungsgemäße Lösung ist, wie oben erwähnt, beispielsweise eine Werkzeuglängenkompensation möglich, welche vor der eigentlichen Werkstückbearbeitung durchgeführt wird. Es kann dabei grundsätzlich eine solche Kompensation direkt durchgeführt werden, wenn die Trägereinrichtung eine Werkzeug-Trägereinrichtung ist. Es ist auch möglich, eine solche Kompensation indirekt dadurch durchzuführen, dass eine Werkzeuglängenänderung berücksichtigt wird durch entsprechende Repositionierung der Trägereinrichtung, wenn diese eine Werkstück-Trägereinrichtung ist.

Durch die erfindungsgemäße Lösung wird eine Kurzhub-Trägereinrichtung bereitgestellt, wobei eine kompakte Bauweise realisierbar ist. Es sind auch existierende Werkzeugmaschinen nachrüstbar, da die schwimmende Lagerung auf konstruktiv einfache Weise ausbildbar ist und auch die exakte Positionierung der Trägereinrichtung mit konstruktiv einfachen Mitteln erreichbar ist. Beispielsweise ist die Verstelleinrichtung mit Hilfe eines hydraulischen Gleichlaufzylinders und eines Servoventils ausgebildet.

Insbesondere ist der Verschiebungsweg eine lineare Wegstrecke. Dadurch kann beispielsweise auf einfache Weise eine Werkzeuglängenkompensation bezogen auf eine Längsrichtung eines Werkzeugs durchgeführt werden.

Ferner ist es günstig, wenn der Verschiebungsweg parallel zu einer Hauptachse der Werkzeugmaschine ist und beispielsweise parallel zu einer Hauptachse für die lineare Verschieblichkeit von Werkstücken an dem Maschinengestell.

Ferner ist es günstig, wenn der Verschiebungsweg parallel zu einer Längserstreckungsrichtung der mindestens einen Trägereinrichtung ist. Dadurch lässt sich auf einfache Weise beispielsweise eine Werkzeugkompensation durchführen.

Insbesondere ist der Verschiebungsweg parallel oder koaxial zu einer Drehachse der mindestens einen Trägereinrichtung. Eine Repositionierung der Trägereinrichtung führt dadurch nicht zu einer Unwucht oder dergleichen.

Bei einer Ausführungsform ist die mindestens eine Trägereinrichtung als Motorspindel ausgebildet. Beispielsweise ist sie als Werkzeugspindel oder Werkstückspindel ausgebildet. Durch die Repositionierung der Trägereinrichtung an der Halteeinrichtung und die schwimmende Lagerung lässt sich diese als Ganzes einschließlich eines Motors verschieben.

Günstig ist es, wenn die mindestens eine Halteeinrichtung eine durchgehende Ausnehmung aufweist, durch welche die mindestens eine Trägereinrichtung durchgetaucht ist. Über die Ausnehmung lässt sich die Trägereinrichtung auf einfache Weise schwimmend gelagert an der Halteeinrichtung halten.

Ganz besonders vorteilhaft ist es, wenn die Lagereinrichtung mindestens eine erste Stützeinrichtung und eine zweite Stützeinrichtung umfasst, welche beabstandet zueinander sind, wobei die erste Stützeinrichtung und die zweite Stützeinrichtung jeweils mit einem ersten Bereich an der Halteeinrichtung fixiert sind und jeweils mit einem zweiten Bereich an der mindestens einen Trägereinrichtung fixiert sind. Dadurch lässt sich auf einfache Weise eine schwimmende Lagerung der mindestens einen Trägereinrichtung an der Halteeinrichtung realisieren. Die erste Stützeinrichtung und die zweite Stützeinrichtung lassen sich als flache Elemente wie beispielsweise in der Form von Blechmembranen oder Blechmembranpaketen ausbilden. Es lässt sich dadurch eine kardanische Aufhängung mit einer Verschieblichkeit in der Verschiebungsrichtung auf einfache Weise realisieren. Die Kombination aus Halteeinrichtung und schwimmend gelagerter mindestens einer Trägereinrichtung lässt sich kompakt aufbauen.

Günstig ist es, wenn der erste Bereich der ersten Stützeinrichtung und/oder der zweiten Stützeinrichtung um einen Umfang eines Rands einer Ausnehmung der Halteeinrichtung, durch welche die mindestens eine Trägereinrichtung durchgetaucht ist, fixiert ist. Es ergibt sich dadurch ein großer Bereich für die Fixierung der ersten Stützeinrichtung und/oder der zweiten Stützeinrichtung an der Halteeinrichtung. Dadurch lässt sich auf einfache Weise eine schwimmende Lagerung in der Verschiebungsrichtung realisieren, wobei die Lagerung in allen Querrichtungen zu der Verschiebungsrichtung mit hoher Steifigkeit realisierbar ist.

Aus dem gleichen Grund ist es günstig, wenn der zweite Bereich der ersten Stützeinrichtung und/oder zweiten Stützeinrichtung um einen Umfang der mindestens einen Trägereinrichtung an der mindestens einen Trägereinrichtung fixiert ist.

Ganz besonders vorteilhaft ist es, wenn die Halteeinrichtung eine Vorderseite aufweist, welche einem Arbeitsraum zugewandt ist, und eine Hinterseite aufweist, welche dem Arbeitsraum abgewandt ist, und die erste Stützeinrichtung an der Vorderseite der Halteeinrichtung fixiert ist und die zweite Stützeinrichtung an der Rückseite der Halteeinrichtung fixiert ist. Die erste Stützeinrichtung und die zweite Stützeinrichtung lassen sich flach ausbilden. Es ergibt sich ein kompakter Aufbau, wobei vorhandene Standardmaschinen auch nachrüstbar sind; der Eingriff an die Halteeinrichtung ist minimal. Insbesondere muss diese nicht umgebaut oder ausgetauscht werden.

Ganz besonders vorteilhaft ist es, wenn die erste Stützeinrichtung und die zweite Stützeinrichtung die Beweglichkeit der mindestens einen Trägereinrichtung in der Verschiebungsrichtung ermöglichen und eine Beweglichkeit der mindestens einen Trägereinrichtung in allen Querrichtungen zur Verschiebungsrichtung sperren. Dadurch ist eine schwimmende Lagerung erreicht, wobei die Ausrichtung und Zentrierung der mindestens einen Trägereinrichtung in allen Querrichtungen zur Verschiebungsrichtung unabhängig von der Position auf dem Verschiebungsweg ist.

Aus dem gleichen Grund ist es günstig, wenn die erste Stützeinrichtung und die zweite Stützeinrichtung parallel zur Verschiebungsrichtung weich und quer zur Verschiebungsrichtung steif und torsionssteif ausgebildet sind. Dies ermöglicht eine Verschieblichkeit auf dem Verschiebungsweg, wobei eine zentrierte Ausrichtung der mindestens einen Trägereinrichtung zu der Halteeinrichtung bei jeder Position auf dem Verschiebungsweg erhalten bleibt.

Insbesondere sind die erste Stützeinrichtung und die zweite Stützeinrichtung ringförmig ausgebildet oder weisen ringförmig angeordnete Elemente auf. Die erste Stützeinrichtung und die zweite Stützeinrichtung als Ganzes oder deren Elemente umgeben die mindestens eine Trägereinrichtung. Dadurch erhält man eine hohe radiale Steifigkeit und eine hohe Torsionssteifigkeit, wobei die Verschieblichkeit auf dem Verschiebungsweg ermöglicht ist.

Günstig ist es, wenn die erste Stützeinrichtung und/oder die zweite Stützeinrichtung membranartig ausgebildet sind. Die erste Stützeinrichtung und die zweite Stützeinrichtung sind gewissermaßen als "dünne Haut" (wobei die Dicke bezogen ist auf die Verschiebungsrichtung) ausgebildet. Dadurch lässt sich auf einfache Weise eine schwimmende Lagerung der mindestens einen Trägereinrichtung an der Halteeinrichtung erreichen, wobei die Verschieblichkeit der mindestens einen Trägereinrichtung auf eine lineare Verschiebungsrichtung beschränkt ist.

Beispielsweise sind die erste Stützeinrichtung und/oder die zweite Stützeinrichtung als Blechplatten oder Blechplattenpakete ausgebildet. Dadurch lässt sich auf einfache Weise eine "Membranaufhängung" der mindestens einen Trägereinrichtung an der Halteeinrichtung erreichen.

Üblicherweise ist ein maximaler Verschiebungsweg kleiner als 5 mm und insbesondere kleiner als 2 mm, um beispielsweise eine Werkzeuglängenkompensation durchführen zu können.

Günstig ist es, wenn die mindestens eine Trägereinrichtung über die Lagereinrichtung in der Verschiebungsrichtung frei beweglich an der Halteeinrichtung aufgehängt ist. Dadurch ergibt sich auf einfache Weise die Möglichkeit beispielsweise einer Werkzeuglängenkompensation.

Ganz besonders vorteilhaft ist es, wenn an der Halteeinrichtung und der mindestens einen Trägereinrichtung eine Messeinrichtung zur Bestimmung der Position der mindestens einen Trägereinrichtung oder des Verschiebungswegs angeordnet ist. Dadurch wird es ermöglicht, eine Position der mindestens einen Trägereinrichtung zu der Halteeinrichtung mit hoher Präzision einzustellen und beispielsweise eine Präzision in der Größenordnung von ± 1/100 mm zu erreichen. Wenn eine Verschiebung der mindestens einen Trägereinrichtung durchgeführt wird, dann kann durch die Messeinrichtung die aktuelle Position geprüft werden und anhand der aktuellen Position die Verstelleinrichtung entsprechend angesteuert werden.

Insbesondere ist die Messeinrichtung mit einer Steuerungseinrichtung verbunden, die die Verstelleinrichtung ansteuert. Dadurch kann die Messeinrichtung der Steuerungseinrichtung Positionssignale übermitteln, die wiederum zur exakten Einstellung der Position verwendet werden.

Ganz besonders vorteilhaft ist es, wenn die Verstelleinrichtung in der Verschiebungsrichtung steif und/oder selbsthemmend ausgebildet ist. Dies bedeutet, dass, wenn die Verstelleinrichtung eine bestimmte Position einstellt, diese dann auch direkt festgelegt ist, ohne dass weitere Elemente zur Festlegung dieser Position vorgesehen werden müssen.

Bei einem vorteilhaften Ausführungsbeispiel weist die Verstelleinrichtung mindestens einen hydraulischen oder pneumatischen Stellzylinder auf, mittels welchem auf einfache und hochgenaue Weise die Position der schwimmend gelagerten mindestens einen Trägereinrichtung zu der Halteeinrichtung einstellbar ist. Beispielsweise ist der Stellzylinder ein hydraulischer Gleichlaufzylinder.

Insbesondere ist dem mindestens einen Stellzylinder eine steuerbare und/oder regelbare Ventileinrichtung zugeordnet. Diese Ventileinrichtung umfasst beispielsweise ein Servoventil. Dadurch lässt sich mit hoher Genauigkeit und auf einfache Weise die Position der schwimmend gelagerten und mindestens einen Trägereinrichtung einstellen. Es ist dabei auch möglich, den Stellzylinder (mit oder ohne Ventileinrichtung) an der entsprechenden Trägereinrichtung vorzumontieren. Dadurch ist beispielsweise auch ein Austausch der Trägereinrichtung (wie beispielsweise Werkzeugspindelaustausch) an der Werkzeugmaschine auf einfache Weise durchführbar.

Insbesondere ist an der mindestens einen Trägereinrichtung eine Kolbeneinrichtung mit einer ersten Kolbenfläche, welche einem ersten Kolbenraum zuweist, und einer zweiten Kolbenfläche, welche einem zweiten Kolbenraum zuweist, angeordnet. Durch entsprechende Fluidbeaufschlagung wie beispielsweise hydraulische Beaufschlagung der ersten Kolbenfläche und der zweiten Kolbenfläche lässt sich die Bewegungsrichtung der mindestens einen Trägereinrichtung und damit auch deren Position einstellen.

Insbesondere ist die Position der mindestens einen Trägereinrichtung durch die Fluidbeaufschlagung des ersten Kolbenraums und des zweiten Kolbenraums mittels einer Ventileinrichtung einstellbar. Durch entsprechende Fluidansteuerung des ersten Kolbenraums und des zweiten Kolbenraums ist eine exakte Positionierung möglich.

Vorteilhafterweise sind der erste Kolbenraum und der zweite Kolbenraum zylindrisch ringförmig ausgebildet. Entsprechende Kolbenflächen sind Ringflächen. Diese umgeben die Trägereinrichtung. Dadurch lässt sich über den gesamten Umfang der Trägereinrichtung eine gleichmäßige Fluidbeaufschlagung erhalten.

Günstig ist es, wenn an der Halteeinrichtung eine Zentriereinrichtung für die Montage der mindestens einen Trägereinrichtung angeordnet ist. Über die schwimmenden Lagerung hängt die Trägereinrichtung an der Halteeinrichtung. Die Zentriereinrichtung erleichtert bei der Montage die Ausrichtung.

Insbesondere umfasst die Zentriereinrichtung mindestens ein Anlageelement, welches eine quer zu der Verschiebungsrichtung orientierte Anlagefläche für die mindestens eine Trägereinrichtung aufweist. Die mindestens eine Trägereinrichtung lässt sich bei der Montage auf die Anlagefläche auflegen, um eine zentrierte Fixierung an der Halteeinrichtung zu erleichtern.

Bei einer Ausführungsform ist die Halteeinrichtung ein Schlitten, welcher relativ zum Maschinengestell linear beweglich ist. Über den Schlitten ist die Halteeinrichtung und die mindestens eine Trägereinrichtung relativ zum Maschinengestell linear beweglich.

Es kann ferner vorgesehen sein, dass die Halteeinrichtung wiederum an einem Schlitten gehalten ist, welcher relativ zum Maschinengestell linear beweglich ist. Dadurch lässt sich beispielsweise auf einfache Weise eine Linearbeweglichkeit der mindestens einen Trägereinrichtung in zwei linear unabhängigen Richtungen realisieren.

Es kann ferner mindestens eine Werkstück-Trägereinrichtung vorgesehen sein, welche parallel zur Verschiebungsrichtung verschieblich ist. Dadurch lässt sich beispielsweise auf einfache Weise mittels der erfindungsgemäßen Lösung eine Werkzeuglängenkompensation durchführen.

Vorteilhaft ist es, wenn n parallel zueinander ausgerichtete Trägereinrichtungen vorgesehen sind, welche an der gleichen Halteeinrichtung fixiert sind, wobei n mindestens zwei ist, und wobei mindestens (n - 1) Trägereinrichtungen an der Halteeinrichtung schwimmend gelagert sind. Grundsätzlich genügt es beispielsweise bei einer Doppelspindler-Werkzeugmaschine, wenn nur eine Spindel schwimmend gelagert ist, um eine Werkzeuglängenkompensation durchzuführen.

Der Erfindung liegt ferner die Aufgabe zugrunde, ein Verfahren zur Kompensation von Abweichungen einer Werkzeuglänge von einem Referenzwert bereitzustellen, welches auf einfache Weise durchführbar ist.

Diese Aufgabe wird bei dem eingangs genannten Verfahren erfindungsgemäß dadurch gelöst, dass eine Trägereinrichtung, welche ein Werkzeug hält, in einer Verschiebungsrichtung parallel zur Richtung der Abweichung von dem Referenzwert entsprechend der Abweichung positioniert wird, wobei die Trägereinrichtung an einer Halteeinrichtung in der Verschiebungsrichtung schwimmend gelagert wird und die gewünschte Verschiebungsposition der Trägereinrichtung durch Festlegung der schwimmenden Lagerung festgestellt wird.

Die schwimmende Lagerung der Trägereinrichtung an der Halteeinrichtung erlaubt eine Beweglichkeit, ohne dass beispielsweise eine Gleitführung oder Wälzführung vorgesehen werden muss. Innerhalb eines "Kurzhubbereichs" ist die schwimmende Lagerung eine hochpräzise Positionseinstellung der Trägereinrichtung zu der Halteeinrichtung möglich. Durch Festlegung der schwimmenden Lagerung wird eine Festlegung der Position der Trägereinrichtung zu der Halteeinrichtung erreicht.

Das erfindungsgemäße Verfahren lässt sich auf der erfindungsgemäßen Werkzeugmaschine durchführen.

Weitere vorteilhafte Ausgestaltungen des erfindungsgemäßen Verfahrens wurden bereits im Zusammenhang mit der erfindungsgemäßen Werkzeugmaschine erläutert.

Insbesondere wird die relative Position der Trägereinrichtung zu der Halteeinrichtung gemessen und bei der Repositionierung der Trägereinrichtung wird die gemessene Position verwendet. Dadurch ist eine hochgenaue Einstellung der Position ermöglicht.

Die nachfolgende Beschreibung bevorzugter Ausführungsformen dient im Zusammenhang mit den Zeichnungen der näheren Erläuterung der Erfindung. Es zeigen:
- Figur 1: eine perspektivische (Teil-)Darstellung eines Ausführungsbeispiels einer erfindungsgemäßen Werkzeugmaschine;
- Figur 2: eine Teildarstellung der Werkzeugmaschine gemäß Figur 1;
- Figur 3: eine weitere Teildarstellung der Werkzeugmaschine gemäß Figur 1 (Draufsicht);
- Figur 4: eine Teil-Seitenansicht der Werkzeugmaschine gemäß Figur 1;
- Figur 5: eine Ansicht von oben einer Halteeinrichtung für WerkzeugTrägereinrichtungen der Werkzeugmaschine gemäß Figur 1;
- Figur 6: eine perspektivische Hinteransicht der Halteeinrichtung gemäß Figur 5 (in der Richtung D*);
- Figur 7: eine perspektivische Vorderansicht der Halteeinrichtung gemäß Figur 5 (aus der Richtung D);
- Figur 8: eine Draufsicht auf die Halteeinrichtung gemäß Figur 5 in der Richtung D;
- Figur 9: eine Schnittansicht längs der Linie 9-9 gemäß Figur 8;
- Figur 10: eine Vergrößerung des Ausschnittes A gemäß Figur 9; und
- Figur 11: eine Vergrößerung des Ausschnitts B gemäß Figur 10.

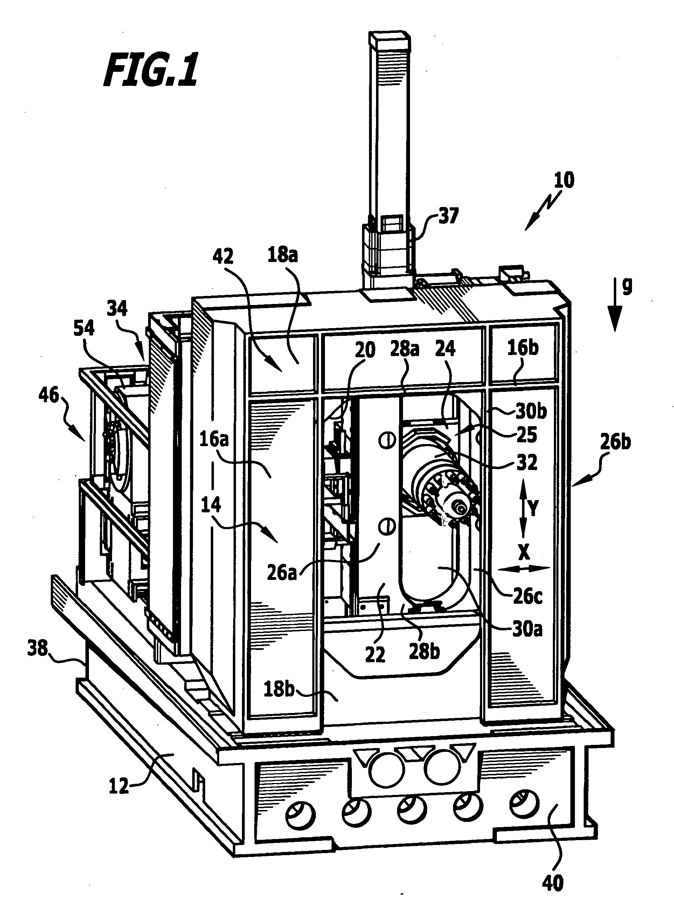

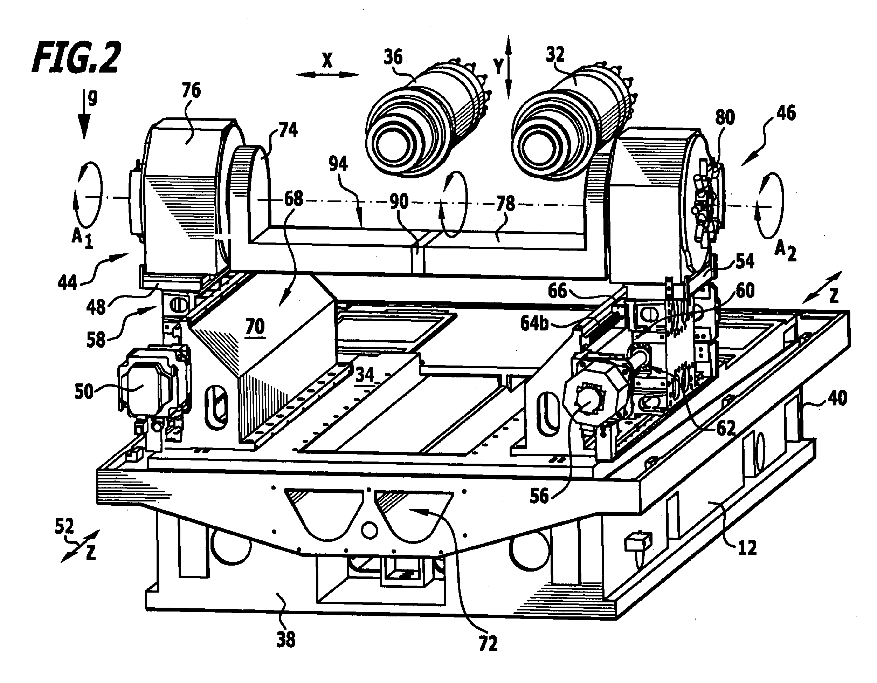

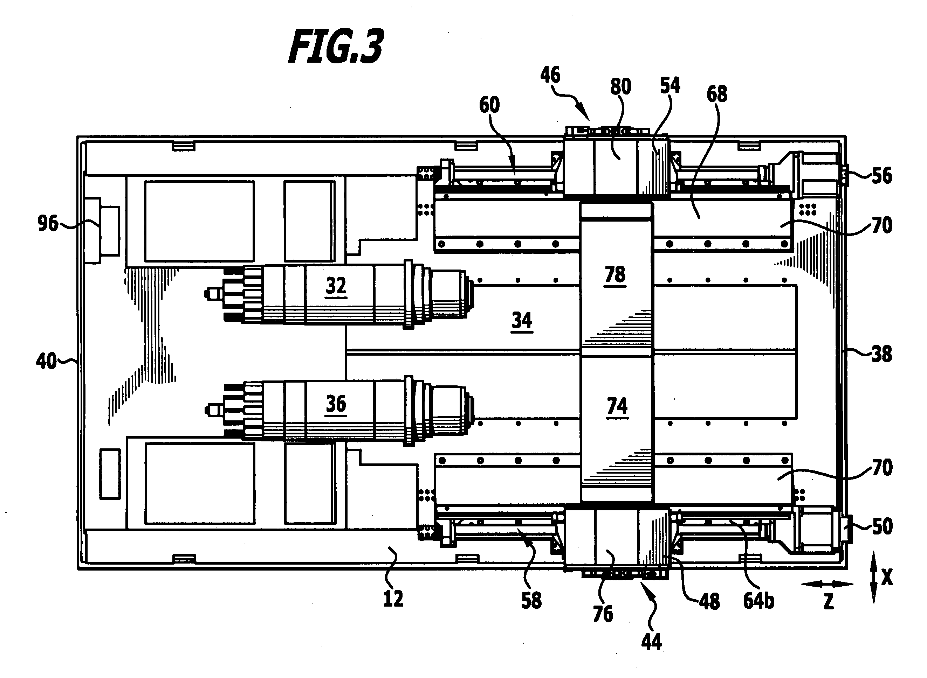

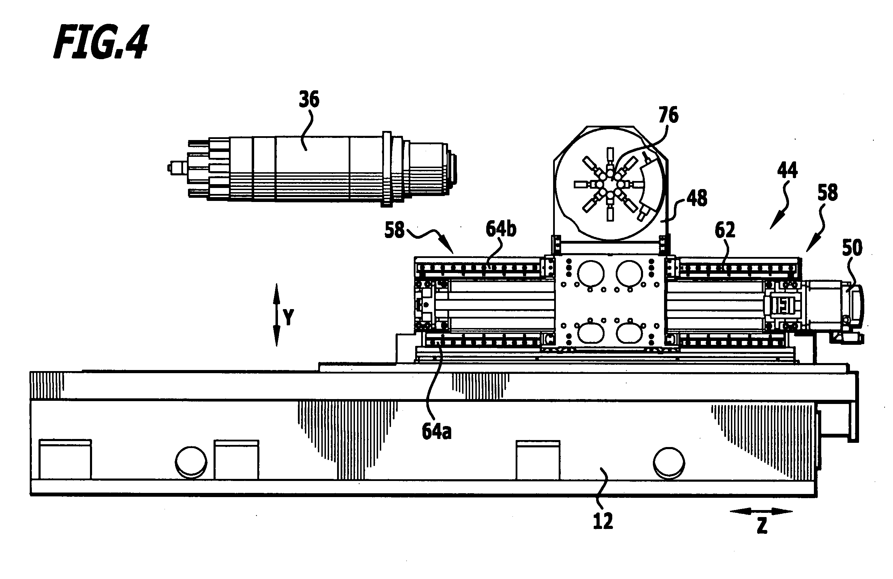

Ein Ausführungsbeispiel einer erfindungsgemäßen Werkzeugmaschine, welche in Figur 1 (ohne Arbeitsraumverkleidung) gezeigt und dort mit 10 bezeichnet ist und welche in Teildarstellungen in den Figuren 2 bis 4 gezeigt ist, umfasst ein Maschinenbett 12. Das Maschinenbett 12 hat eine im Wesentlichen quaderförmige Hüllfläche. Über das Maschinenbett 12 ist die Werkzeugmaschine 10 auf einer Unterlage aufgestellt.

Die Werkzeugmaschine 10 ist beispielsweise ein Bearbeitungszentrum und dient zur spanabhebenden Werkzeug-Bearbeitung von metallischen Werkstücken.

An dem Maschinenbett 12 ist ein Maschinengestell 14 angeordnet, welches in Form eines Ständers oder Portals ausgebildet ist. Das Maschinengestell 14 weist beabstandete Schenkel 16a, 16b auf, welche parallel zueinander orientiert sind und insbesondere in vertikaler Richtung (parallel zur Schwerkraftrichtung) orientiert sind. Die Schenkel 16a, 16b sind durch einen oberen Verbindungssteg 18a und durch einen unteren Verbindungssteg 18b verbunden. Der untere Verbindungssteg 18b ist dem Maschinenbett 12 zugewandt bzw. an diesem fixiert.

Zwischen den Schenkeln 16a und 16b sowie den Verbindungsstegen 18a und 18b ist eine durchgehende Öffnung 20 gebildet. In dieser Öffnung 20 ist ein (Werkzeugträger-)Schlitten 22 (erster Schlitten 22) geführt. Es ist dabei eine erste Führungseinrichtung an dem oberen Verbindungssteg 18a und eine zweite Führungseinrichtung an dem unteren Verbindungssteg 18b angeordnet. Das Maschinengestell 14 bildet einen Schlittenträger für den ersten Schlitten 22. Dieser ist an dem Maschinengestell 14 in einer Richtung/Gegenrichtung x beweglich. Diese x-Richtung ist vorzugsweise eine horizontale Richtung bezogen auf die Schwerkraftrichtung.

Der erste Schlitten 22 ist durch einen Antrieb in seiner Verschiebungsbewegung angetrieben. Bei diesem Antrieb kann es sich beispielsweise um einen Kugelgewindeantrieb oder Linearmotorantrieb handeln.

An dem ersten Schlitten 22 ist ein zweiter Schlitten 24 verschieblich geführt. Eine Verschiebungsrichtung des zweiten Schlittens 24 an dem ersten Schlitten 22, welcher dadurch einen Schlittenträger für den zweiten Schlitten 24 bildet, ist senkrecht zur x-Richtung. Die entsprechende y-Richtung ist eine bezogen auf die Schwerkraftrichtung vertikale Richtung. Der zweite Schlitten 24 ist eine Halteeinrichtung 25 für zwei Werkzeugträgereinrichtungen (siehe unten), welche Werkzeugspindeln und insbesondere Motorspindeln sind.

Der erste Schlitten 22 ist (doppel-)jochartig ausgebildet mit einem äußeren ersten Schenkel 26a und einem beabstandeten äußeren zweiten Schenkel 26b und einem mittleren dritten Schenkel 26c, welcher zwischen dem ersten Schenkel 26a und dem zweiten Schenkel 26b liegt. Der erste Schenkel 26a, der zweite Schenkel 26b und der dritte Schenkel 26c sind parallel zueinander ausgerichtet und dabei in vertikaler Richtung orientiert. Sie sind jeweils durch einen oberen Verbindungssteg 28a und einen unteren Verbindungssteg 28b miteinander verbunden.

Zwischen dem ersten Schenkel 26a und dem dritten Schenkel 26c sowie dem oberen Verbindungssteg 28a und dem unteren Verbindungssteg 28b ist eine durchgehende erste Öffnung 30a gebildet. Durch diese Öffnung 30a ist ein Teilbereich einer ersten Werkzeug-Trägereinrichtung 32 durchgetaucht. Die erste Werkzeug-Trägereinrichtung 32 umfasst insbesondere eine Werkzeugspindel, welche ein oder mehrere insbesondere rotierbare Werkzeuge hält, wobei über ein Werkzeug in einem Arbeitsraum 34 Werkstücke bearbeitbar sind.

Zwischen dem dritten Schenkel 26c und dem zweiten Schenkel 26b sowie dem oberen Verbindungssteg 28a und dem unteren Verbindungssteg 28b ist eine durchgehende zweite Öffnung 30b ausgebildet (in Figur 1 nicht sichtbar). Durch diese Öffnung 30b ist ein Teilbereich einer zweiten Werkzeug-Trägereinrichtung 36 durchgetaucht. Die zweite Werkzeug-Trägereinrichtung 36 umfasst insbesondere eine Werkzeugspindel, welche parallel zu der Werkzeugspindel der ersten Werkzeug-Trägereinrichtung 32 orientiert ist. An der zweiten Werkzeug-Trägereinrichtung 36 sind ein oder mehrere rotierbare Werkzeuge gehalten, über welche in dem Arbeitsraum 34 Werkstücke bearbeitbar sind.

Die erste Werkzeug-Trägereinrichtung 32 und die zweite Werkzeug-Trägereinrichtung 36 sind insbesondere als Motorspindeln ausgebildet.

Es ist dabei möglich, dass über die erste Werkzeug-Trägereinrichtung 32 und die zweite Werkzeug-Trägereinrichtung 36 gleichzeitig ein Werkstück in dem Arbeitsraum 34 bearbeitet wird oder dass gleichzeitig mehrere Werkstücke in dem Arbeitsraum 34 bearbeitet werden.

Der zweite Schlitten 24 ist in seiner Verschiebungsbewegung in der y-Richtung durch einen Antrieb 37 angetrieben. Bei dem Antrieb 37 handelt es sich beispielsweise um einen Kugelgewindeantrieb oder um einen Linearmotorantrieb.

Die erste Werkzeug-Trägereinrichtung 32 und die zweite Werkzeug-Trägereinrichtung 36 sind an demselben Schlitten (zweiter Schlitten) 24 angeordnet. Es ist grundsätzlich auch möglich, dass der ersten Werkzeug-Trägereinrichtung 32 und der zweiten Werkzeug-Trägereinrichtung 36 jeweils eigene Schlitteneinrichtungen mit jeweils einem ersten Schlitten für die x-Beweglichkeit und einem zweiten Schlitten für die y-Beweglichkeit zugeordnet sind (in der Zeichnung nicht gezeigt).

Ein Maschinenaufbau, bei dem eine oder mehrere Werkzeug-Trägereinrichtungen an einem Schlitten (dem zweiten Schlitten 24) gehalten sind, welcher insbesondere jochförmig ausgebildet ist, wobei der Schlittenträger selber ein Schlitten ist (der erste Schlitten 22), welcher verschieblich ist, wird auch als Box-in-Box-Konzept bezeichnet. Dieses ist in der EP 0 614 724 B1 beschrieben, auf die ausdrücklich Bezug genommen wird.

Die Werkzeugmaschine 10 weist ein Vorderende 38 und ein Hinterende 40 auf. Das Maschinengestell ist sowohl beabstandet zum Vorderende 38 als auch beabstandet zum Hinterende 40 an dem Maschinenbett 12 angeordnet. Zwischen dem Maschinengestell 14 und dem Hinterende 40 kann an dem Maschinengestell 14 eine Verkleidung 42 angeordnet sein. Eine Steuerungseinrichtung für die Werkzeugmaschine 10 kann in diesem Bereich angeordnet sein.

Der Arbeitsraum 34 liegt zwischen dem Vorderende 38 und dem Maschinengestell 14.

Die Werkzeugmaschine 10 umfasst eine erste Werkstückträgereinrichtung 44 und eine zweite Werkstückträgereinrichtung 46. Die erste Werkstückträgereinrichtung 44 weist einen ersten Werkstückschlitten 48 auf, welchem ein eigener erster Antrieb 50 zugeordnet ist. Der erste Antrieb 50 ist dabei beispielsweise ein Kugelgewindeantrieb oder ein Linearmotorantrieb.

Über den ersten Antrieb 50 ist der erste Werkstückschlitten 48 in einer Verschiebungsrichtung 52 verschieblich. Diese Verschiebungsrichtung 52 (z-Richtung) liegt senkrecht zur x-Richtung und zur y-Richtung. Der erste Werkstückschlitten 48 und damit ein an ihm gehaltenes Werkstück ist in der z-Richtung relativ zum Maschinengestell 14 verschieblich.

Die zweite Werkstückträgereinrichtung 46 weist entsprechend einen zweiten Werkstückschlitten 54 auf, dem ein eigener zweiter Antrieb 56 zugeordnet ist. Der zweite Antrieb 56 ist beispielsweise ein Kugelgewindeantrieb oder ein Linearmotorantrieb. Die Verschiebungsrichtung des zweiten Werkstück schlittens 54 ist parallel zur Verschiebungsrichtung 52 und damit ebenfalls schlittens 54 ist parallel zur Verschiebungsrichtung 52 und damit ebenfalls eine z-Richtung.

Die erste Werkstückträgereinrichtung 44 und die zweite Werkstückträgereinrichtung 46 sind in der x-Richtung beabstandet zueinander. Der Arbeitsraum 34 liegt zwischen der ersten Werkstückträgereinrichtung 44 und der zweiten Werkstückträgereinrichtung 46.

Der erste Werkstückschlitten 48 ist an einer als Ganzes mit 58 bezeichneten ersten Bahnführungseinrichtung verschieblich geführt. Entsprechend ist der zweite Werkstückschlitten 54 an einer zweiten Bahnführungseinrichtung 60 verschieblich geführt. Die erste Bahnführungseinrichtung 58 und die zweite Bahnführungseinrichtung 60 sind vorzugsweise im Wesentlichen parallel zueinander orientiert und reichen von dem Vorderende 38 oder von einem Bereich in der Nähe des Vorderendes 38 zu dem Maschinengestell 14.

Die erste Bahnführungseinrichtung 58 und die zweite Bahnführungseinrichtung 60 sind an dem Maschinenbett 12 angeordnet. Sie begrenzen den Arbeitsraum 34 seitlich.

Die jeweilige Führungseinrichtung 62 der ersten Werkstückträgereinrichtung 44 und der zweiten Werkstückträgereinrichtung 46 umfasst beispielsweise eine untere Führungsleiste 64a und eine obere Führungsleiste 64b, an welchen der zugeordnete Werkstückschlitten 48 oder 54 über entsprechende Führungsschuhe 66 geführt (und gehalten) ist.

Die Führungseinrichtung 62 mit ihrer unteren Führungsleiste 64a und ihrer oberen Führungsleiste 64b ist mit einer Abdeckung 68 zu dem Arbeitsraum hin abgedeckt. Die Abdeckung 68 umfasst dabei eine Schrägfläche 70, welche sind in z-Richtung erstreckt und in einem spitzen Winkel zu der x-Richtung angeordnet ist. Die Abdeckungen 68 der ersten Werkstückträgereinrichtung 44 und der zweiten Werkstückträgereinrichtung 46 sind dabei beabstandet zueinander.

Über die Schrägfläche 70 können Bearbeitungsabfälle und insbesondere Bearbeitungsspäne einer Späneabführeinrichtung 72, welche am Maschinenbett 12 angeordnet ist, zugeführt werden.

Oberhalb der oberen Führungsleiste 64b sind die Bahnführungseinrichtungen 58 und 60 gegenüber dem Arbeitsraum 34 durch bewegliche Abdeckungen (Schieber) abgedeckt (in den Zeichnungen nicht gezeigt). Es ist dabei jeweils ein erster Schieber vorgesehen, welcher auf einer Seite des ersten Werkstückschlittens 48 und an einem ersten Endbereich der zugeordneten Bahnführungseinrichtung 58 bzw. 60 fixiert ist; weiterhin ist ein zweiter Schieber vorgesehen, welcher an einem gegenüberliegenden Bereich des jeweiligen Werkstückschlittens 48 bzw. 54 fixiert ist und an einem anderen Endbereich der zugeordneten Bahnführungseinrichtung 58 bzw. 60. Die jeweiligen Schieber sind beispielsweise faltenbalgartig oder als Lamelleneinrichtung oder als Gliederschürze oder als Rollos ausgebildet; die zugeordnete Bahnführungseinrichtung 58 bzw. 60 ist bei jeder Stellung des Werkstückschlittens 48 bzw. 54 zu dem Arbeitsraum abgedeckt.

Ferner ist dem Arbeitsraum 34 eine Arbeitsraumverkleidung zur Kapselung des Arbeitsraums 34 gegenüber dem Außenraum zugeordnet (in der Zeichnung nicht gezeigt).

An dem ersten Werkstückschlitten 48 ist ein erstes Brückenelement 74 angeordnet. Das erste Brückenelement 74 ist drehbar um eine Rotationsachse A₁ an dem ersten Werkstückschlitten 48 angeordnet. Das erste Brückenelement 74 dient als Werkstückhalter für ein oder mehrere zu bearbeitende Werkstücke. Im Querschnitt ist es beispielsweise L-förmig.

An dem ersten Werkstückschlitten 48 ist ein erster Drehantrieb 76 angeordnet, um das erste Brückenelement 74 um die Drehachse A₁ drehen zu können.

Das erste Brückenelement 74 ragt in den Arbeitsraum 34 hinein.

An dem zweiten Werkstückschlitten 54 ist in den Arbeitsraum weisend ein zweites Brückenelement 78 angeordnet, welches ebenfalls einen L-förmigen Querschnitt hat. Es ist über einen an dem zweiten Werkstückschlitten 54 angeordneten zweiten Drehantrieb 80 um eine Drehachse A₂, welche parallel zur Drehachse A₁ ist, drehbar.

Auch das zweite Brückenelement 78 ist als Werkstückhalter ausgebildet bzw. an ihm ist ein Werkstückhalter fixierbar.

Die Achsen A₁ und A₂ sind bezogen auf die Schwerkraftrichtung g horizontale Achsen. Sie sind quer und insbesondere senkrecht zur z-Richtung und parallel zur x-Richtung ausgerichtet.

Das erste Brückenelement 74 und das zweite Brückenelement 78 weist jeweils einen Fixierungsbereich auf, über welchen es an dem zugehörigen Werkstückschlitten 48 bzw. 54 drehbar gehalten ist. An dem Fixierungsbereich ist ein beispielsweise quaderförmiger Bereich angeordnet, welcher sich parallel zur Drehachse A₁ bzw. A₂ erstreckt.

Das erste Brückenelement 74 weist ein stirnseitiges Ende auf, welches einem stirnseitigen Ende des zweiten Brückenelements 78 zuweist. Das stirnseitige Ende des ersten Brückenelements 74 und das stirnseitige Ende des zweiten Brückenelements 78 sind beabstandet zueinander, so dass der erste Werkstückschlitten 48 und der zweite Werkstückschlitten 54 aneinander vorbeibewegt werden können bzw. relativ zueinander positioniert werden können, ohne dass die Brückenelemente 74 und 78 aneinander stoßen. Ein Zwischenraum zwischen den stirnseitigen Enden kann dabei (nach Ausrichtung des ersten Brückenelements 74 und des zweiten Brückenelements 78 relativ zueinander) durch ein Zwischenelement 90 aufgefüllt werden.

Die erfindungsgemäße Werkzeugmaschine 10 umfasst eine Verbindungseinrichtung mit einer oder mehreren Verbindungsstellen, über welche das erste Brückenelement 74 und das zweite Brückenelement 78 miteinander verbindbar und insbesondere miteinander klemmbar sind und damit der erste Werkstückschlitten 48 und der zweite Werkstückschlitten 54 miteinander verbindbar sind. Es wird dadurch ein Werkstückträger 94 bereitgestellt, welcher durch die Kombination des ersten Werkstückschlittens 48 und des zweiten Werkstückschlittens 54 gebildet bzw. gehalten ist. Es können dadurch an dem Werkstückträger 94 auch große Werkstücke, deren Größe beispielsweise in der Größenordnung der Breite des Arbeitsraums 34 liegt, bearbeitet werden bzw. es können mehrere Werkstücke an dem Werkstückträger 94 "aufgereiht" werden, um diese gleichzeitig oder unmittelbar nacheinander (ohne Werkstückwechsel außerhalb des Arbeitsraums) zu bearbeiten.

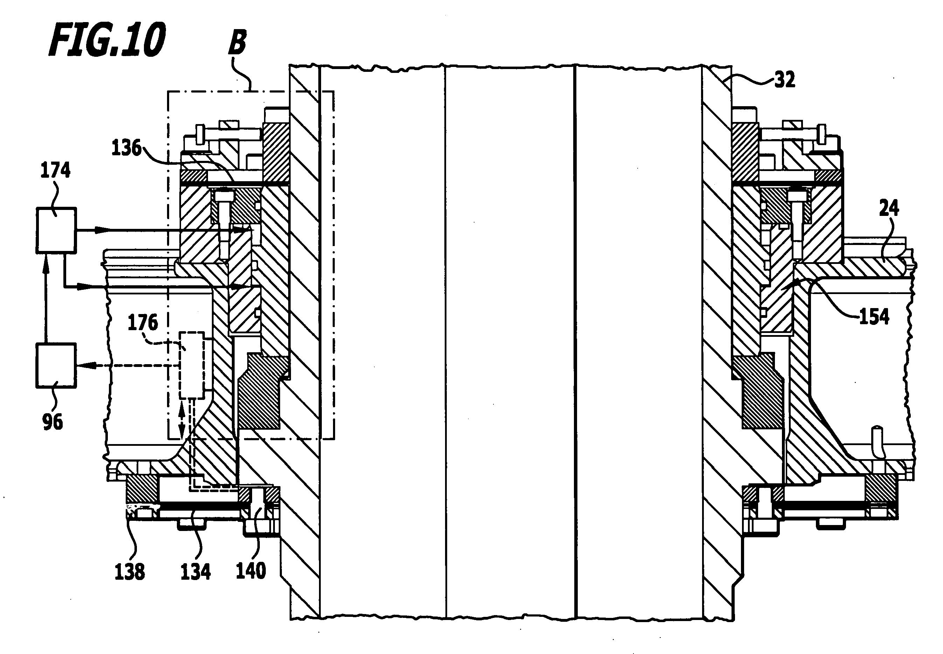

Die Werkzeugmaschine 10 umfasst dazu eine Steuerungseinrichtung 96 (Figur 10), über welche der erste Antrieb 50 zur Linearverschiebung des ersten Werkstückschlittens 48 und der zweite Antrieb 56 zur Linearverschiebung des zweiten Werkstückschlittens 54 synchronisierbar ist und ferner der erste Antrieb 76 und der zweite Antrieb 80 zur Drehung des Werkstückträgers 94 synchronisierbar sind.

Die Verbindungseinrichtung dient zur Verbindung des ersten Brückenelements 74 und des zweiten Brückenelements 78. Bezüglich ihrer Ausgestaltung wird auf die PCT/EP2008/061790 verwiesen.

Die Verbindungseinrichtung erlaubt eine unterschiedliche Positionierung des ersten Werkstückschlittens 48 und des zweiten Werkstückschlittens 65 in der z-Richtung relativ zum Maschinengestell 14 sowie eine unterschiedliche Drehstellung des ersten Brückenelements 74 und des zweiten Brückenelements 78, wenn nicht geklemmt ist. Dadurch ist ein Ausgleich möglich. Beispielsweise können dadurch, wenn zwei Werkzeug-Trägereinrichtungen eingesetzt werden, an denen Werkzeuge beispielsweise nicht gleichmäßig abgenutzt sind, der erste Werkstückschlitten und der zweite Werkstückschlitten relativ zueinander verstellt werden, um dies auszugleichen, d. h. eine Werkzeugabnutzungskompensation zu erzielen. Eine typische Größenordnung für das Spiel 140 (für die maximale Verstellbarkeit) liegt bei ± 3 mm.

Ferner lässt sich, wenn dies gewünscht wird, ein Versatz der Drehachsen A₁ und A₂ einstellen.

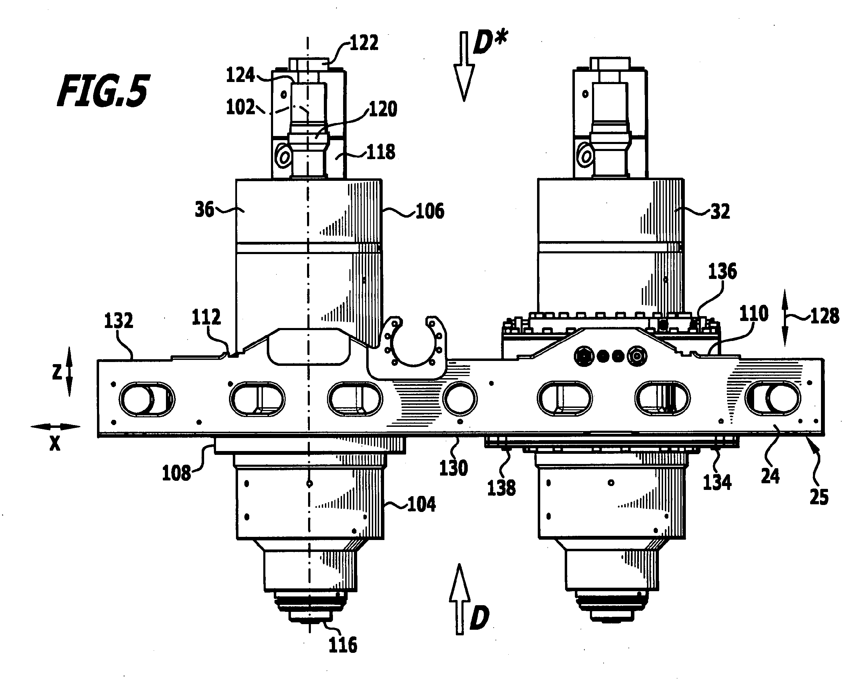

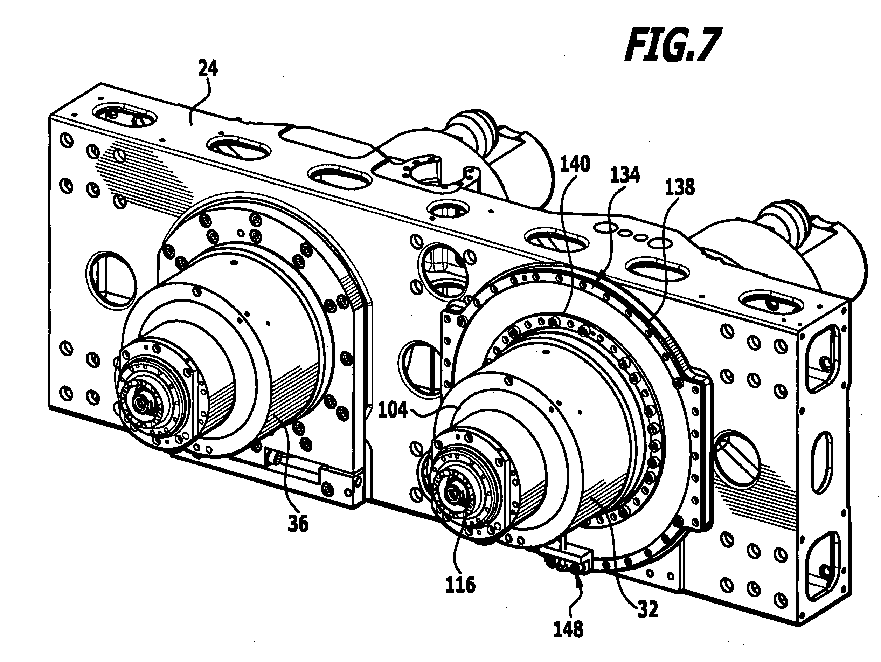

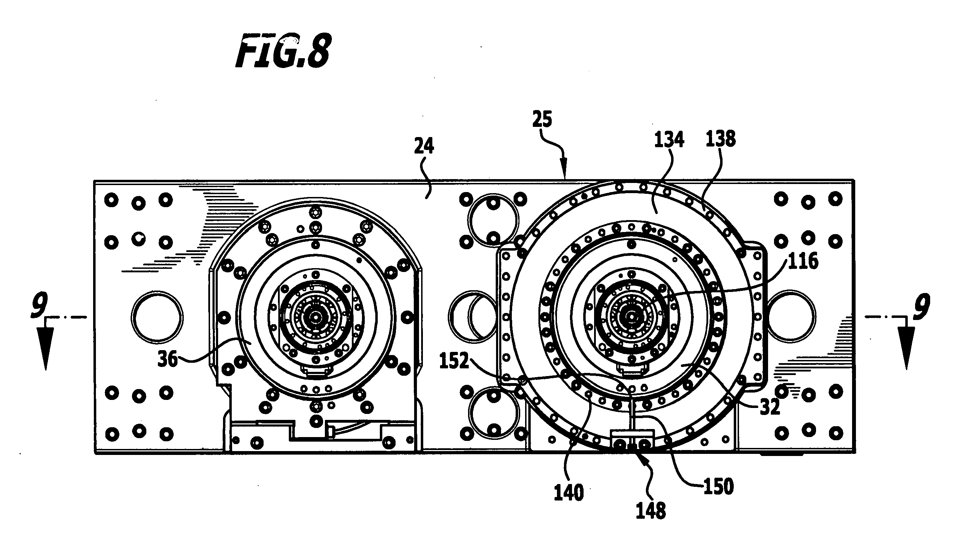

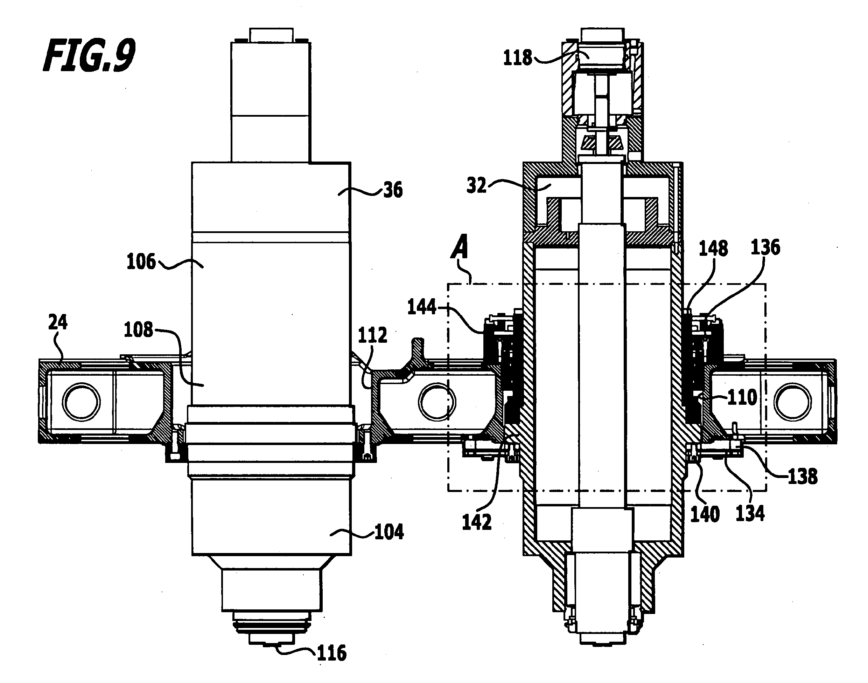

An der Halteeinrichtung 25 (Figuren 5 bis 11) sind die Werkzeug-Trägereinrichtungen 32 und 36 fixiert. Die erste Werkzeug-Trägereinrichtung 32 und die zweite Werkzeug-Trägereinrichtung 36 sind dabei grundsätzlich gleich ausgebildet und insbesondere als Motorspindeln ausgebildet. Sie weisen jeweils eine Längserstreckungsrichtung 102 auf, welche parallel zur Richtung z ist.

Bei einer Werkstückbearbeitung wirken Werkzeuge, welche an den WerkzeugTrägereinrichtungen 32 und 36 fixiert sind, auf ein oder mehrere Werkstücke, welche an den Werkstückschlitten 48 und 44 fixiert sind.

Die erste Werkzeug-Trägereinrichtung 32 und die zweite Werkzeug-Trägereinrichtung 36 weisen jeweils einen Vorderbereich 104 auf, welcher zu dem Arbeitsraum 34 weist bzw. in dem Arbeitsraum 34 angeordnet ist, einen Hinterbereich 106, welcher von dem Arbeitsraum 34 weg weist, und einen Mittelbereich 108, über welchen die entsprechende Werkzeug-Trägereinrichtung 32 bzw. 36 an der Halteeinrichtung 25 fixiert ist.

Die Halteeinrichtung 25 weist dazu eine erste durchgehende Ausnehmung 110 und eine beabstandet zu dieser angeordnete zweite Ausnehmung 112 auf. Die erste Ausnehmung 110 und die zweite Ausnehmung 112 haben jeweils eine Achse parallel zur jeweiligen Längserstreckungsrichtung 102 der WerkzeugTrägereinrichtungen. Durch die erste Ausnehmung 110 ist die erste WerkzeugTrägereinrichtung 32 durchgetaucht und durch die zweite Ausnehmung 112 ist die zweite Werkzeug-Trägereinrichtung 36 durchgetaucht.

Die zweite Werkzeugträgereinrichtung 36 ist fest (unbeweglich starr) an der Halteeinrichtung 25 fixiert. Die erste Trägereinrichtung 32 ist über eine Lagereinrichtung 114 schwimmend an der Halteeinrichtung 25 gehalten, wie untenstehend noch näher erläutert wird.

In dem Vorderbereich 104 der ersten Werkzeug-Trägereinrichtung 32 und der zweiten Werkzeug-Trägereinrichtung 36 ist jeweils eine Schnittstelle 116 wie eine HSK(Hohlschaftkegel)-Schnittstelle zum Fixieren eines Werkzeugs angeordnet.

Die erste Werkzeug-Trägereinrichtung 32 und die zweite Werkzeug-Trägereinrichtung 36 sind als Werkzeugspindeln und insbesondere Motorspindeln mit einem Motor 118 zum rotativen Antrieb der Schnittstelle 116 und damit eines daran gehaltenen Werkzeugs ausgebildet. Ein gehaltenes Werkzeug lässt sich um eine Drehachse 120 rotieren. Die Drehachse 120 ist parallel zur Längserstreckungsrichtung 102 und parallel zur z-Richtung ausgerichtet.

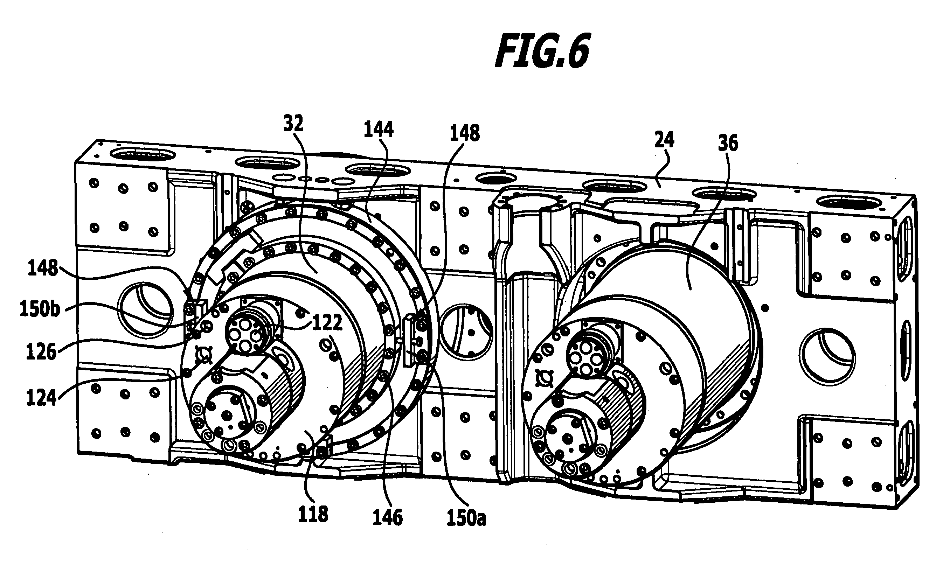

Die erste Werkzeug-Trägereinrichtung 32 und die zweite Werkzeug-Trägereinrichtung 36 weisen jeweils eine erste Anschlusseinrichtung 122 auf (Figur 6), welche zur elektrischen Stromversorgung des entsprechenden Motors 118 dient. Ferner weisen sie eine zweite Anschlusseinrichtung 124 auf, welche zur Bereitstellung von (elektrischen) Steuersignalen von der Steuerungseinrichtung 96 dient. Ferner ist eine dritte Anschlusseinrichtung 126 vorgesehen, über welche eine oder mehrere Fluide und insbesondere Kühlmittel und/oder Schmiermittel bereitstellbar ist. Die dritte Anschlusseinrichtung 126 kann auch eine Schnittstelle für einen pneumatischen Anschluss und/oder hydraulischen Anschluss umfassen.

Die Anschlusseinrichtungen 122, 124 und 126 sind an dem Hinterbereich 106 der jeweiligen ersten Werkzeug-Trägereinrichtung 32 und der zweiten Werkzeug-Trägereinrichtung 36 angeordnet.

Die zweite Werkzeug-Trägereinrichtung 36 ist in der Richtung z unbeweglich an der Halteeinrichtung 25 gehalten. Die erste Trägereinrichtung 32 ist durch die Lagereinrichtung 114 auf einem Verschiebungsweg in einer Verschiebungsrichtung 128 verschieblich positionierbar. Die Verschiebungsrichtung 128 ist parallel zur z-Richtung. Sie ist parallel zur Drehachse 120 der ersten Werkzeug-Trägereinrichtung 32. Ferner ist sie parallel zur Längserstreckungsrichtung 102 der ersten Werkzeug-Trägereinrichtung 32.

Die Halteeinrichtung 25 (der zweite Schlitten 24) hat eine Vorderseite 130, welche dem Arbeitsraum 34 zugewandt ist. Die Vorderbereiche 104 der ersten Werkzeug-Trägereinrichtung 32 und der zweiten Werkzeug-Trägereinrichtung 36 ragen über diese Vorderseite 130 hinaus. Die Halteeinrichtung 25 hat ferner eine Rückseite 132, welche dem Arbeitsraum 34 abgewandt ist. Die Hinterbereiche 106 der ersten Werkzeugträgereinrichtung 32 und der zweiten Werkzeug-Trägereinrichtung 36 ragen über diese Hinterseite 132 hinaus.

Die Lagereinrichtung 114 umfasst zur schwimmenden Lagerung der ersten Werkzeug-Trägereinrichtung 32 eine erste Stützeinrichtung 134 und eine zweite Stützeinrichtung 136. Die erste Stützeinrichtung 134 ist an der Vorderseite 130 der Halteeinrichtung 25 fixiert und umgibt dabei die erste Ausnehmung 110. Sie weist einen ersten Bereich 138 auf, über welchen die Fixierung an der Halteeinrichtung 25 erfolgt. Beispielsweise ist die erste Stützeinrichtung 134 an dem ersten Bereich 138 mit einer Mehrzahl von insbesondere gleichmäßig verteilten Schrauben oder Bolzen an der Halteeinrichtung 25 fixiert.

Die erste Stützeinrichtung 134 ist mit einem zweiten Bereich 140 an der ersten Werkzeug-Trägereinrichtung 32 fixiert. Dazu weist diese beispielsweise einen Ringflansch 142 auf, an welchem die erste Stützeinrichtung 134 über den zweiten Bereich 140 mit einer Mehrzahl von insbesondere gleichmäßig verteilten Schrauben oder Bolzen fixiert ist. Die Fixierung erfolgt insbesondere (voll-)umfänglich über die erste Werkzeug-Trägereinrichtung 32.

Die erste Stützeinrichtung 134 ist ringförmig ausgebildet und umgibt die erste Werkzeug-Trägereinrichtung 32 und deckt die erste Ausnehmung 110 ab.

Die zweite Stützeinrichtung 136 ist entsprechend mit einem ersten Bereich 144 an der Hinterseite 132 der Halteeinrichtung 25 fixiert. Mit einem zweiten Bereich 146 ist sie an der ersten Werkzeug-Trägereinrichtung 32 fixiert. Die Fixierung erfolgt wiederum (voll-)umfänglich über die erste Werkzeug-Trägereinrichtung 32 und einen Rand der ersten Ausnehmung 110. Auch die zweite Stützeinrichtung 136 ist ringförmig ausgebildet und deckt die erste Ausnehmung 110 an der Hinterseite 132 ab.

Die erste Stützeinrichtung 134 und die zweite Stützeinrichtung 136 sind weich bezüglich einer Verschieblichkeit in der Verschiebungsrichtung 128 ausgebildet. Sie sind steif in allen Querrichtungen und torsionssteif ausgebildet. Dadurch ist die erste Werkzeug-Trägereinrichtung 32 über die Lagereinrichtung 114 schwimmend, d.h. in der Verschiebungsrichtung 128 frei beweglich, an der Halteeinrichtung 25 gehalten, wobei eine Linearverschieblichkeit auf einem Verschiebungsweg in der Verschiebungsrichtung 128 möglich ist. Die Beweglichkeit in allen Querrichtungen zu der Verschiebungsrichtung 128 (in radialen Richtungen bezogen auf die Drehachse 120) ist gesperrt.

Die erste Stützeinrichtung 134 und die zweite Stützeinrichtung 136 sind entsprechend flach ausgebildet (in einer Richtung parallel zur Verschiebungsrichtung 128), um die schwimmende Lagerung zu ermöglichen. Sie sind insbesondere membranförmig in dem Sinne, dass beim Membranspannungszustand eine Auslenkung auf dem Verschiebungsweg in der Verschiebungsrichtung 128 erfolgt, wobei unter Belastung nur Zugkräfte parallel zur Verschiebungsrichtung 128 aufgenommen werden. Eine typische Dicke der ersten Stützeinrichtung 134 und der zweiten Stützeinrichtung liegt in der Größenordnung von 0,5 mm bis 5 mm.

Die erste Stützeinrichtung 134 und die zweite Stützeinrichtung 136 sind insbesondere durch ein Blechelement und insbesondere durch eine Blechplatte oder durch ein Blechplattenpaket gebildet.

Bei einem Ausführungsbeispiel sind dabei die erste Stützeinrichtung 134 und die zweite Stützeinrichtung 136 einstückig ausgebildet.

Es ist grundsätzlich auch möglich, die "Weichheit" in der Verschiebungsrichtung 128 und die Steifigkeit in allen Querrichtungen dazu zu erhalten, indem die erste Stützeinrichtung 134 und die zweite Stützeinrichtung 136 eine Mehrzahl von radial angeordneten Einzelelementen aufweist, welche verteilt um den Rand der ersten Ausnehmung 110 an der Halteeinrichtung 25 fixiert sind und an der ersten Trägereinrichtung 32 fixiert sind.

Die erste Werkzeug-Trägereinrichtung ist über die erste Stützeinrichtung 134 und die beabstandete zweite Stützeinrichtung 136 an der Halteinrichtung 25 schlittenfrei aufgehängt. Durch die schwimmende Lagerung ist eine Verschieblichkeit parallel zu einer Hauptachse der Werkzeugmaschine 10, nämlich in der z-Richtung ermöglicht. Auf diesem Verschiebungsweg ist eine Einstellung der Position der ersten Werkzeug-Trägereinrichtung 32 relativ zu der Halteeinrichtung 25 und damit auch relativ zu der in der z-Richtung beweglich fixierten zweiten Werkzeug-Trägereinrichtung 36 möglich. Ein entsprechender Hub der ersten Werkzeug-Trägereinrichtung 32 in der Verschiebungsrichtung 128 ist begrenzt durch die membranartige Ausbildung der ersten Stützeinrichtung 134 und der zweiten Stützeinrichtung 136. Ein typischer Wert für den maximalen Hub liegt bei 2 mm. Bei einem konkreten Ausführungsbeispiel ist ein Hub von ± 0,5 mm und damit ein Gesamthub von 1 mm erlaubt ("Kurzhub").

Der Halteeinrichtung 25 ist eine Zentriereinrichtung 148 zugeordnet, welche der Erleichterung der Montage der ersten Werkzeug-Trägereinrichtung 32 an der Halteeinrichtung 25 dient. Beim Betrieb der Werkzeugmaschine 10 ist die Zentriereinrichtung 148 nicht wirksam. Die Zentriereinrichtung 148 umfasst an der Vorderseite 130 und der Rückseite 132 der Halteeinrichtung 25 angeordnete Anlageelemente 150a, 150b, 150c. Diese weisen jeweils eine Anlagefläche 152 auf, welche quer zur Verschiebungsrichtung 128 orientiert ist. Während der Montage lässt sich über die Anlageelemente 150a, 150b, 150c, welche insbesondere als Schrauben ausgebildet sind, vor Fixierung der ersten Werkzeug-Trägereinrichtung 32 mittels der ersten Stützeinrichtung 134 und der zweiten Stützeinrichtung 136 an der Halteeinrichtung 25 diese genau ausrichten.

Da bei der erfindungsgemäßen Lösung über die Lagereinrichtung 114 die erste Werkzeug-Trägereinrichtung 32 in der Verschiebungsrichtung 128 frei beweglich schwimmend gelagert ist und keine Schlittenführung oder dergleichen für die erste Werkzeug-Trägereinrichtung 32 vorgesehen ist, muss ein besonderer Aufwand für die Ausrichtung quer zur Verschiebungsrichtung 128 betrieben werden.

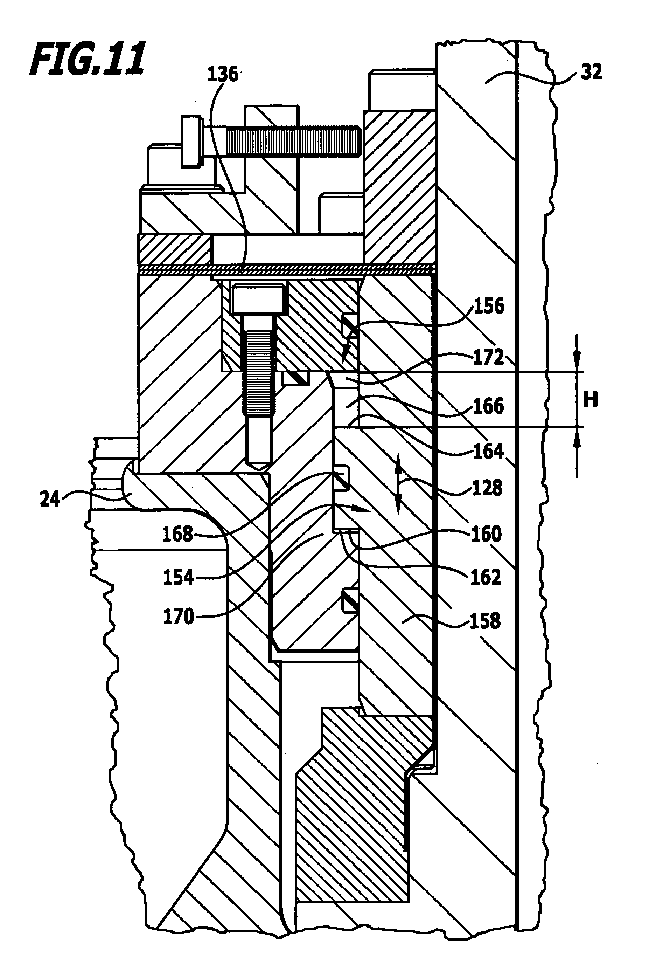

Der ersten Werkzeug-Trägereinrichtung 32 ist eine Verstelleinrichtung 154 zugeordnet (Figuren 10, 11), über welche eine Position der ersten WerkzeugTrägereinrichtung auf dem Verschiebungsweg längs der Verschiebungsrichtung 128 mit hoher Genauigkeit einstellbar und die entsprechende Position feststellbar ist. Durch die Feststellung wird die freie Beweglichkeit gesperrt. Die Verstelleinrichtung 154 ist dazu steif in der Verschiebungsrichtung 128 und beispielsweise selbsthemmend ausgebildet. Die kardanische Aufhängung der ersten Werkzeug-Trägereinrichtung 32 über die Lagereinrichtung 114 wird über die Verstelleinrichtung 154 "blockiert", das heißt die freie Verschieblichkeit auf dem Verschiebungsweg in der Verschiebungsrichtung 128 wird gesperrt.

Die Verstelleinrichtung 154 umfasst einen Stellzylinder 156. Der Stellzylinder 156 wiederum umfasst eine Kolbeneinrichtung 158 mit einer ersten Kolbenfläche 160, welche einem ersten Kolbenraum 162 zugewandt ist und diesen begrenzt. Ferner umfasst die Kolbeneinrichtung 158 eine zweite Kolbenfläche 164, welche einem zweiten Kolbenraum 166 zuweist und diesen begrenzt. Zwischen der ersten Kolbenfläche 160 und der zweiten Kolbenfläche 164 ist eine Dichtung 168 beispielsweise in Form eines O-Rings angeordnet. Die erste Kolbenfläche 160 und die zweite Kolbenfläche 164 sind Ringflächen, welche die erste Trägereinrichtung 32 umgeben. Entsprechend sind der erste Kolbenraum 162 und der zweite Kolbenraum 166 Ringräume, welche die erste WerkzeugTrägereinrichtung 32 umgeben.

Die erste Kolbenfläche 160 und die zweite Kolbenfläche 164 liegen einander gegenüber. Durch entsprechende Druckbeaufschlagung lässt sich die Kolbeneinrichtung 158 bewegen und damit die erste Werkzeug-Trägereinrichtung 32 an der Halteeinrichtung 25 verschieben. Je nach dem, ob in dem ersten Kolbenraum 162 oder dem zweiten Kolbenraum 166 Überdruck zu dem anderen Kolbenraum herrscht, wird die Bewegungsrichtung eingestellt. Der maximale Hub der Verschieblichkeit und die Verschiebungsrichtung 128 ist in Figur 11 mit H angedeutet und durch die Ausdehnung der Kolbenräume 162 und 166 parallel zur Verschiebungsrichtung 128 bestimmt.

Der Stellzylinder 156 weist eine durch eine Wandung 170 begrenzte Kolbenaufnahme 172 auf, in welcher die Kolbeneinrichtung 158 beweglich ist.

Der erste Kolbenraum 162 und der zweite Kolbenraum 166 sind mit Hydraulikfluid beaufschlagbar. Es ist eine Ventileinrichtung 174 vorgesehen, über welche die Fluidbeaufschlagung einstellbar ist. Dadurch ist die erste Werkzeug-Trägereinrichtung 32 positionierbar, wobei die Position auf dem Verschiebungsweg festgelegt ist.

Die Ventileinrichtung 174 umfasst insbesondere ein Servoventil. Dadurch lässt sich die Druckbeaufschlagung der Kolbeneinrichtung 158 mit großer Präzision steuern und damit wiederum lässt sich die Position der Werkzeug-Trägereinrichtung 32 auf dem Verschiebungsweg in der Verschiebungsrichtung 128 mit hoher Präzision einstellen.

Der Stellzylinder 156 ist beispielsweise als Gleichlaufzylinder ausgebildet. Ein hydraulischer Gleichlaufzylinder ist über die erste Kolbenfläche 160 und die zweite Kolbenfläche 164 doppelwirkend. Bei konstanter Fördermenge an Hydraulikfluid ergibt sich für beide Bewegungsrichtungen die gleiche Hubkraft und die gleiche Hubgeschwindigkeit.

Die Ventileinrichtung 174 ist insbesondere mit der Steuerungseinrichtung 96 angesteuert.

An der Halteeinrichtung 25 und der ersten Werkzeug-Trägereinrichtung 32 ist eine Messeinrichtung 176 angeordnet, durch welche die (momentane) Position der ersten Werkzeug-Trägereinrichtung 32 auf dem Verschiebungsweg messbar ist. Beispielsweise umfasst die Messeinrichtung 176 einen Glasmessstab zur Positionsermittlung der ersten Werkzeug-Trägereinrichtung. Auch andere Ausbildungen der Messeinrichtung 176 sind möglich.

Die Messeinrichtung 176 gibt ihre Messsignale an die Steuerungseinrichtung 96, sodass grundsätzlich zu jedem Zeitpunkt die Position der ersten Werkzeug-Trägereinrichtung 32 bekannt ist und bei der Einstellung einer Position dies hochgenau möglich ist. Die Messeinrichtung 176 ermittelt die relative Position der ersten Werkzeug-Trägereinrichtung 32 auf dem Verschiebungsweg zu der Halteeinrichtung 25 direkt; die Position bzw. Bewegung der ersten Werkzeug-Trägereinrichtung 32 wird direkt abgegriffen und direkt oder über die Steuerungseinrichtung 96 der Ventileinrichtung 174 bereitgestellt. Bei einer Vorgabe einer Position der ersten Werkzeug-Trägereinrichtung 32 erfolgt dann eine entsprechende Ansteuerung und die Position der ersten WerkzeugTrägereinrichtung 32 kann auch bei der Einwirkung von äußeren Kräften stabilisiert werden.

Die erfindungsgemäße Werkzeugmaschine funktioniert wie folgt:
Die Werkzeugmaschine 10 ist als Doppelspindler ausgebildet mit einer ersten Werkzeug-Trägereinrichtung 32 und einer zweiten Werkzeug-Trägereinrichtung 36. Grundsätzlich ist es so, dass an der ersten Werkzeug-Trägereinrichtung 32 und der zweiten Werkzeug-Trägereinrichtung 36 gehaltene Werkzeuge leicht unterschiedlich ausgebildet sein können oder auch unterschiedlich abgenutzt werden können.

Durch die erfindungsgemäße Werkzeugmaschine ist über die erste WerkzeugTrägereinrichtung 32 eine Kompensation einer solchen Längenabweichung (in der Verschiebungsrichtung 128) möglich. Ein typischer maximaler Hubweg liegt dabei in der Größenordnung von ca. 1 mm.

Die erste Werkzeug-Trägereinrichtung 32 ist über die Lagereinrichtung 114 schwimmend gelagert. Sie ist in der Verschiebungsrichtung 128 frei linear verschieblich. Diese Linearverschieblichkeit ist dabei schmierungsfrei; es ist keine Gleitführung oder Walzführung vorhanden. Durch Verwendung der ersten Stützeinrichtung 134 und der zweiten Stützeinrichtung 136 (wobei auch noch weitere Stützeinrichtungen vorgesehen werden können) erhält man eine hohe radiale Steifigkeit und eine hohe Torsionssteifigkeit der Aufhängung, sodass die erste Werkzeug-Trägereinrichtung 32 an der Halteeinrichtung 25 "kardanisch" schwimmend aufgehängt ist.

Es ergibt sich dadurch eine kompakte Bauweise. Grundsätzlich ist es sogar möglich, dass eine Standardmaschine entsprechend nachrüstbar ist.

Die Verstelleinrichtung 154 sorgt für die Einstellung einer gewünschten Position der ersten Werkzeug-Trägereinrichtung 32 auf dem Verschiebungsweg, wobei die gewünschte Position für die Verstelleinrichtung 154 festgelegt ist. Die Einstellung ist mit hoher Genauigkeit möglich. Über die Messeinrichtung 176 erfolgt ein direkter Abgriff der relativen Position und relativen Bewegung der ersten Werkzeug-Trägereinrichtung 32 zu der Halteeinrichtung 25.

Es ist dabei grundsätzlich möglich, dass die erste Werkzeug-Trägereinrichtung 32 und der Stellzylinder 156 an dieser vormontiert sind, sodass ein schneller Austausch an der Werkzeugmaschine 10 ermöglicht ist.

Bei der Bearbeitung eines Werkstücks, bei welchem ein an der ersten Werkzeug-Trägereinrichtung 32 gehaltenes Werkzeug auf das Werkstück einwirkt, ist die Position der ersten Werkzeug-Trägereinrichtung 32 relativ zu der Halteeinrichtung 25 festgelegt.

Die Einstellbarkeit der Position einer Trägereinrichtung relativ zu einer Halteeinrichtung wurde oben anhand einer Werkzeug-Trägereinrichtung beschrieben. Es ist grundsätzlich auch möglich, dass die erfindungsgemäße Lösung im Zusammenhang mit einer Werkstück-Trägereinrichtung verwendet wird. Eine Werkzeugmaschine mit zwei Werkstückspindeln ist in der WO 2004/012888 A1 beschrieben, auf die Bezug genommen wird.

Grundsätzlich genügt es, wenn eine Werkzeugmaschine n parallel ausgerichtete Werkzeug-Trägereinrichtungen bzw. Werkstückeinrichtungen aufweist, dass (n - 1) schwimmend gelagerte Trägereinrichtungen vorgesehen sind. Beispielsweise genügt es bei einer Doppelspindelmaschine, wenn nur eine Spindel schwimmend gelagert ist entsprechend der erfindungsgemäßen Lösung.

Durch die erfindungsgemäße Lösung lässt sich die Abweichung eine Werkzeugs von einem Referenzwert (welcher beispielsweise durch ein Werkzeug, welches an einer festen Werkzeug-Trägereinrichtung entsprechend der zweiten Werkzeug-Trägereinrichtung 36 fixiert ist, vorgegeben ist) auf einfache Weise kompensieren. Dazu wird über die Verstelleinrichtung 154 die schwimmend gelagerte erste Werkzeug-Trägereinrichtung 32 so entsprechend der Abweichung von dem Referenzwert verschoben, dass eine Kompensation erreicht wird. Durch Festlegung der ersten Werkzeug-Trägereinrichtung 32 an der schwimmenden Lagereinrichtung 114 wird die entsprechende Verschiebungsposition festgestellt.

Die erfindungsgemäße Lösung mit schwimmender Lagerung der Trägereinrichtung und insbesondere Werkzeug-Trägereinrichtung 32 an der Halteeinrichtung 25 kann alleine oder in Kombination mit einer z-Kompensierbarkeit an den Werkstück-Trägereinrichtungen 44 und 46 realisiert sein.

## Patentansprüche

1. Werkzeugmaschine, umfassend ein Maschinengestell (14), mindestens eine Trägereinrichtung (32; 36) für ein Werkzeug oder ein Werkstück, durch die ein wirkendes Werkzeug oder ein Werkstück, auf das mit einem Werkzeug eingewirkt wird, bei der Werkstückbearbeitung gehalten wird, und eine Halteeinrichtung (25), welche die mindestens eine Trägereinrichtung (32; 36) gegenüber dem Maschinengestell (14) fest oder beweglich hält,
**dadurch gekennzeichnet , dass** eine Lagereinrichtung (114) vorgesehen ist, durch welche die mindestens eine Trägereinrichtung (32) an der Halteeinrichtung (25) schwimmend gelagert ist, wobei die Trägereinrichtung (32) über die schwimmende Lagerung an der Halteeinrichtung (25) aufgehängt ist, mit einer Verschieblichkeit in einer Verschiebungsrichtung (128) längs eines Verschiebungswegs, und dass eine Verstelleinrichtung (154) vorgesehen ist, durch welche die Position der mindestens einen Trägereinrichtung (32) längs des Verschiebungswegs einstellbar und feststellbar ist.

2. Werkzeugmaschine nach Anspruch 1, **dadurch gekennzeichnet, dass** der Verschiebungsweg eine lineare Wegstrecke ist und/oder dass der Verschiebungsweg parallel zu einer Hauptachse (z) der Werkzeugmaschine ist und/oder dass der Verschiebungsweg parallel zu einer Längserstreckungsrichtung (102) der mindestens einen Trägereinrichtung (32) ist und/oder dass der Verschiebungsweg parallel oder koaxial zu einer Drehachse (120) der mindestens einen Trägereinrichtung (32) ist.

3. Werkzeugmaschine nach einem der vorangehenden Ansprüche, **dadurch gekennzeichnet, dass** die mindestens eine Trägereinrichtung (32) als Motorspindel ausgebildet ist.

4. Werkzeugmaschine nach einem der vorangehenden Ansprüche, **dadurch gekennzeichnet, dass** die mindestens eine Halteeinrichtung (25) eine durchgehende Ausnehmung (110) aufweist, durch welche die mindestens eine Trägereinrichtung (32) durchgetaucht ist.

5. Werkzeugmaschine nach einem der vorangehenden Ansprüche, **dadurch gekennzeichnet, dass** die Lagereinrichtung (114) mindestens eine erste Stützeinrichtung (134) und eine zweite Stützeinrichtung (136) umfasst, welche beabstandet zueinander sind, wobei die erste Stützeinrichtung (134) und die zweite Stützeinrichtung (136) jeweils mit einem ersten Bereich (138; 144) an der Halteeinrichtung (25) fixiert sind und jeweils mit einem zweiten Bereich (140; 146) an der mindestens einen Trägereinrichtung (32) fixiert sind, und insbesondere dass der erste Bereich (138; 144) der ersten Stützeinrichtung (134) und/oder der zweiten Stützeinrichtung (136) um einen Umfang eines Rands einer Ausnehmung (110) der Halteeinrichtung (25), durch welche die mindestens eine Trägereinrichtung (32) durchgetaucht ist, fixiert ist, und insbesondere dass der zweite Bereich (140; 146) der ersten Stützeinrichtung (134) und/oder zweiten Stützeinrichtung (136) um einen Umfang der mindestens einen Trägereinrichtung (32) an der mindestens einen Trägereinrichtung (32) fixiert ist, und insbesondere dass die Halteeinrichtung (25) eine Vorderseite (130) aufweist, welche einem Arbeitsraum (34) zugewandt ist, und eine Hinterseite (132) aufweist, welche dem Arbeitsraum (34) abgewandt ist, und die erste Stützeinrichtung (134) an der Vorderseite (130) der Halteeinrichtung (25) fixiert ist und die zweite Stützeinrichtung (136) an der Rückseite (132) der Halteeinrichtung (25) fixiert ist, und insbesondere dass die erste Stützeinrichtung (134) und die zweite Stützeinrichtung (136) eine Beweglichkeit der mindestens einen Trägereinrichtung (32) in der Verschiebungsrichtung (128) ermöglichen und eine Beweglichkeit der mindestens einen Trägereinrichtung (32) in allen Querrichtungen zur Verschiebungsrichtung (128) sperren.

6. Werkzeugmaschine nach Anspruch 5, **dadurch gekennzeichnet, dass** die erste Stützeinrichtung (134) und die zweite Stützeinrichtung (136) parallel zur Verschiebungsrichtung (128) weich und quer zur Verschiebungsrichtung (128) steif und torsionssteif ausgebildet sind.

7. Werkzeugmaschine nach Anspruch 5 oder 6, **dadurch gekennzeichnet, dass** die erste Stützeinrichtung (134) und die zweite Stützeinrichtung (136) ringförmig ausgebildet sind oder ringförmig angeordnete Elemente aufweisen und/oder dass die erste Stützeinrichtung (134) und/oder die zweite Stützeinrichtung (136) membranartig ausgebildet sind und/oder dass die erste Stützeinrichtung (134) und/oder die zweite Stützeinrichtung (136) als Blechplatten oder Blechplattenpakete ausgebildet sind.

8. Werkzeugmaschine nach einem der vorangehenden Ansprüche, **dadurch gekennzeichnet, dass** die mindestens eine Trägereinrichtung (32) über die Lagereinrichtung (114) in der Verschiebungsrichtung (128) frei beweglich an der Halteeinrichtung (25) aufgehängt ist.

9. Werkzeugmaschine nach einem der vorangehenden Ansprüche, **dadurch gekennzeichnet, dass** an der Halteeinrichtung (25) und der mindestens einen Trägereinrichtung (32) eine Messeinrichtung (176) zur Bestimmung der Position der mindestens einen Trägereinrichtung (32) auf dem Verschiebungsweg angeordnet ist, und insbesondere dass die Messeinrichtung (176) mit einer Steuerungseinrichtung (96) verbunden ist, die die Verstelleinrichtung (154) ansteuert.

10. Werkzeugmaschine nach einem der vorangehenden Ansprüche, **dadurch gekennzeichnet, dass** die Verstelleinrichtung (154) in der Verschiebungsrichtung (128) steif und/oder selbsthemmend ausgebildet ist.

11. Werkzeugmaschine nach einem der vorangehenden Ansprüche, **dadurch gekennzeichnet, dass** die Verstelleinrichtung (154) mindestens einen hydraulischen oder pneumatischen Stellzylinder (156) aufweist, und insbesondere dass dem mindestens einen Stellzylinder (156) eine steuerbare und/oder regelbare Ventileinrichtung (174) zugeordnet ist, und insbesondere dass an der mindestens einen Trägereinrichtung (32) eine Kolbeneinrichtung (158) mit einer ersten Kolbenfläche (160), welche einem ersten Kolbenraum (162) zuweist, und einer zweiten Kolbenfläche (164), welche einem zweiten Kolbenraum (166) zuweist, angeordnet ist, und insbesondere dass die Position der mindestens einen Trägereinrichtung (32) durch die Fluidbeaufschlagung des ersten Kolbenraums (162) und des zweiten Kolbenraums (166) mittels einer Ventileinrichtung (174) einstellbar ist, und insbesondere dass der erste Kolbenraum (162) und/oder der zweite Kolbenraum (166) zylindrisch ringförmig ausgebildet sind.

12. Werkzeugmaschine nach einem der vorangehenden Ansprüche, **dadurch gekennzeichnet, dass** an der Halteeinrichtung (25) eine Zentriereinrichtung (148) für die Montage der mindestens einen Trägereinrichtung (32) angeordnet ist, und insbesondere dass die Zentriereinrichtung (148) mindestens ein Anlageelement (150a, 150b, 150c) aufweist, welches eine quer zu der Verschiebungsrichtung (128) orientierte Anlagefläche (152) für die mindestens eine Trägereinrichtung (32) aufweist.

13. Werkzeugmaschine nach einem der vorangehenden Ansprüche, **dadurch gekennzeichnet, dass** die Halteeinrichtung (25) ein Schlitten (24) ist, welcher relativ zum Maschinengestell (14) linear beweglich ist und/oder dass die Halteeinrichtung (25) an einem Schlitten (22) gehalten ist, welcher relativ zum Maschinengestell (14) linear beweglich ist.

14. Werkzeugmaschine nach einem der vorangehenden Ansprüche, **gekennzeichnet durch** n parallel zueinander ausgerichtete Trägereinrichtungen (32, 36), welche an der gleichen Halteeinrichtung (25) fixiert sind, wobei n mindestens zwei ist, und wobei mindestens (n - 1) Trägereinrichtungen (32) an der Halteeinrichtung (25) schwimmend gelagert sind.

15. Verfahren zur Kompensation von Abweichungen einer Werkzeuglänge von einem Referenzwert, bei dem eine Trägereinrichtung (32;36), welche ein Werkzeug hält, in einer Verschiebungsrichtung parallel zur Richtung der Abweichung von dem Referenzwert entsprechend der Abweichung positioniert wird, wobei die Trägereinrichtung (32,36) an einer Halteeinrichtung (25) der Verschiebungsrichtung schwimmend gelagert wird, wobei die Trägereinrichtung (32;36) über die schwimmende Lagerung an der Halteeinrichtung (25) aufgehängt ist, und die gewünschte Verschiebungsposition der Trägereinrichtung (32;36) durch Festlegung der schwimmenden Lagerung festgestellt wird.

## Claims

1. Machine tool comprising a machine frame (14), at least one carrier device (32; 36) for a tool or a workpiece by means of which a tool acting on a workpiece or a workpiece being acted upon by a tool is held during the machining of a workpiece, and a holding device (25) holding the at least one carrier device (32; 36) in a non-movable or movable manner relative to the machine frame (14),
**characterized in that** a bearing device (114) is provided by means of which the at least one carrier device (32) is mounted in a floating manner on the holding device (25), the carrier device (32) being suspended from the holding device (25) via the floating mounting thereof, with displaceability in a direction of displacement (128) along a displacement path, and **in that** an adjusting device (154) is provided by means of which the position of the at least one carrier device (32) along the displacement path is adjustable and fixable.

2. Machine tool in accordance with claim 1, **characterized in that** the displacement path is a linear path and/or **in that** the displacement path is parallel to a major axis (z) of the machine tool and/or **in that** the displacement path is parallel to a direction of longitudinal extension (102) of the at least one carrier device (32) and/or **in that** the displacement path is parallel to or coaxial with an axis of rotation (120) of the at least one carrier device (32).

3. Machine tool in accordance with any one of the preceding claims, **characterized in that** the at least one carrier device (32) is configured as a motor spindle.

4. Machine tool in accordance with any one of the preceding claims, **characterized in that** the at least one holding device (25) has a throughopening (110) through which the at least one carrier device (32) extends.

5. Machine tool in accordance with any one of the preceding claims, **characterized in that** the bearing device (114) comprises at least a first support device (134) and a second support device (136) which are spaced apart from one another, each of the first support device (134) and second support device (136) being fixed at a first area (138; 144) thereof to the holding device (25) and at a second area (140; 146) thereof to the at least one carrier device (32), and in particular **in that** the first area (138; 144) of the first support device (134) and/or of the second support device (136) is fixed around a circumference of an edge of an opening (110) of the holding device (25) through which the at least one carrier device (32) extends, and in particular **in that** the second area (140; 146) of the first support device (134) and/or of the second support device (136) is fixed around a circumference of the at least one carrier device (32) on the at least one carrier device (32), and in particular **in that** the holding device (25) has a front side (130) facing towards a work space (34), and a rear side (132) facing away from the work space (34), and **in that** the first support device (134) is fixed to the front side (130) of the holding device (25) and the second support device (136) is fixed to the rear side (132) of the holding device (25), and in particular **in that** the first support device (134) and the second support device (136) allow movability of the at least one carrier device (25) in the direction of displacement (128) and inhibit movability of the at least one carrier device (25) in all directions transverse to the direction of displacement (128).

6. Machine tool in accordance with claim 5, **characterized in that** the first support device (134) and the second support device (136) are soft in a direction parallel to the direction of displacement (128) and are stiff and torsionally stiff in a direction transverse to the direction of displacement (128).

7. Machine tool in accordance with claim 5 or 6, **characterized in that** the first support device (134) and the second support device (136) have an annular configuration or have annularly arranged elements and/or **in that** the first support device (134) and/or the second support device (136) are of membrane-like configuration and/or **in that** the first support device (134) and/or the second support device (136) are configured as sheet metal plates or packs of sheet metal plates.

8. Machine tool in accordance with any one of the preceding claims, **characterized in that** the at least one carrier device (32) is suspended from the holding device (25) via the bearing device (114) so as to permit free movement in the direction of displacement (128).

9. Machine tool in accordance with any one of the preceding claims, **characterized in that** the holding device (25) and the at least one carrier device (32) have arranged thereon a measuring device (176) for determining the position of the at least one carrier device (32) along the displacement path and in particular **in that** the measuring device (176) is connected to a control device (96) which drives the adjusting device (154).

10. Machine tool in accordance with any one of the preceding claims, **characterized in that** the adjusting device (154) is adapted to be stiff and/or self-locking in the direction of displacement (128).

11. Machine tool in accordance with any one of the preceding claims, **characterized in that** the adjusting device (154) has at least one hydraulic or pneumatic adjusting cylinder (156) and in particular **in that** the at least one adjusting cylinder (156) has a controllable valve device (174) associated with it and in particular **in that** the at least one carrier device (32) has arranged thereat a piston device (158) having a first piston face (160) facing towards a first piston chamber (162), and a second piston face (164) facing towards a second piston chamber (166) and in particular **in that** the position of the at least one carrier device (32) is adjustable by fluid-biasing of the first piston chamber (162) and the second piston chamber (166) by means of a valve device (174) and in particular **in that** the first piston chamber (162) and/or the second piston chamber (166) are of cylindrical annular configuration.

12. Machine tool in accordance with any one of the preceding claims, **characterized in that** the holding device (25) has arranged thereat a centring device (148) for the assembly of the at least one carrier device (32) and in particular **in that** the centring device (148) comprises at least one contact element (150a, 150b, 150c) having a contact face (152) for the at least one carrier device (32), said contact face being oriented transversely to the direction of displacement (128).

13. Machine tool in accordance with any one of the preceding claims, **characterized in that** the holding device (25) is a slide (24) which is linearly movable relative to the machine frame (14) and/or **in that** the holding device (25) is held on a slide (22) which is linearly movable relative to the machine frame (14).

14. Machine tool in accordance with any one of the preceding claims, **characterized by** n carrier devices (32, 36) aligned parallel to each other and fixed to the same holding device (25), where n is at least two and wherein at least (n-1) carrier devices (32) are mounted in a floating manner on the holding device (25).

15. Method of compensating for deviations in a tool length from a reference value in which a carrier device (32; 36) holding a tool is positioned, in accordance with the deviation, in a direction of displacement parallel to the direction of the deviation from the reference value, the carrier device (32, 36) being mounted on a holding device (25) in a floating manner so as to permit movement in the direction of displacement, the carrier device (32; 36) being suspended from the holding device (25) via the floating mounting thereof and the desired displacement position of the carrier device (32; 36) being fixed by fixing the floating mounting.

## Revendications

1. Machine-outil, comportant un châssis de machine (14), au moins un dispositif de support (32 ; 36) pour un outil ou une pièce à usiner, lequel permet de maintenir un outil en action ou une pièce à usiner, laquelle est soumise à l'action d'un outil, lors de l'usinage de la pièce à usiner, et un dispositif de maintien (25) qui maintient de manière fixe ou de manière mobile ledit au moins un dispositif de support (32 ; 36) par rapport au châssis de machine (14),
**caractérisée en ce qu'**un dispositif de palier (114) est prévu, lequel permet de loger de manière flottante ledit au moins un dispositif de support (32) sur le dispositif de maintien (25), le dispositif de support (32) étant accroché au-dessus du palier flottant sur le dispositif de maintien (25), avec une possibilité de translation dans une direction de translation (128) le long d'un trajet de translation, et **en ce qu'**un dispositif d'ajustage (154) est prévu, lequel permet d'ajuster et de caler la position dudit au moins un dispositif de support (32) le long du trajet de translation.

2. Machine-outil selon la revendication 1, **caractérisée en ce que** le trajet de translation est un parcours linéaire, et/ou **en ce que** le trajet de translation est parallèle par rapport à un axe principal (z) de la machine-outil, et/ou **en ce que** le trajet de translation est parallèle par rapport à une direction d'extension longitudinale (102) dudit au moins un dispositif de support (32), et/ou **en ce que** le trajet de translation est parallèle ou coaxial par rapport à un axe de rotation (120) dudit au moins un dispositif de support (32).

3. Machine-outil selon l'une quelconque des revendications précédentes, **caractérisée en ce que** ledit au moins un dispositif de support (32) est réalisé comme une électrobroche.

4. Machine-outil selon l'une quelconque des revendications précédentes, **caractérisée en ce que** ledit au moins un dispositif de maintien (25) présente un évidement (110) continu, à travers lequel plonge ledit au moins un dispositif de support (32).

5. Machine-outil selon l'une quelconque des revendications précédentes, **caractérisée en ce que** le dispositif de palier (114) comporte au moins un premier dispositif d'appui (134) et un deuxième dispositif d'appui (136), lesquels sont tenus à distance l'un de l'autre, le premier dispositif d'appui (134) et le deuxième dispositif d'appui (136) étant respectivement fixés par une première zone (138 ; 144) au dispositif de maintien (25) et étant fixés respectivement par une deuxième zone (140 ; 146) audit au moins un dispositif de support (32), et en particulier **en ce que** la première zone (138 ; 144) du premier dispositif d'appui (134) et/ou du deuxième dispositif d'appui (136) est fixée autour d'une périphérie d'un bord d'un évidement (110) du dispositif de maintien (25), à travers lequel est plongé ledit au moins un dispositif de support (32), et en particulier **en ce que** la deuxième zone (140 ; 146) du premier dispositif d'appui (134) et/ou du deuxième dispositif d'appui (136) est fixée autour d'une périphérie dudit au moins un dispositif de support (32), sur ledit au moins un dispositif de support (32), et en particulier **en ce que** le dispositif de maintien (25) présente un côté avant (130) qui est tourné vers un espace de travail (34), et un côté arrière (132) qui est opposé à l'espace de travail (34), et le premier dispositif d'appui (134) est fixé sur le côté avant (130) du dispositif de maintien (25) et le deuxième dispositif d'appui (136) est fixé sur le côté arrière (132) du dispositif de maintien (25), et en particulier **en ce que** le premier dispositif d'appui (134) et le deuxième dispositif d'appui (136) permettent de déplacer ledit au moins un dispositif de support (32) dans la direction de translation (128) et bloquent tout déplacement dudit au moins un dispositif de support (32) dans toutes les directions transversales par rapport à la direction de translation (128).

6. Machine-outil selon la revendication 5, **caractérisée en ce que** le premier dispositif d'appui (134) et le deuxième dispositif d'appui (136) sont réalisés de manière souple parallèlement à la direction de translation (128) et de manière rigide transversalement par rapport à la direction de translation (128) et rigide à la torsion.

7. Machine-outil selon la revendication 5 ou 6, **caractérisée en ce que** le premier dispositif d'appui (134) et le deuxième dispositif d'appui (136) sont réalisés de manière à présenter une forme annulaire ou présentent des éléments disposés de manière annulaire, et/ou **en ce que** le premier dispositif d'appui (134) et/ou le deuxième dispositif d'appui (136) sont réalisés à la manière d'une membrane, et/ou **en ce que** le premier dispositif d'appui (134) et/ou le deuxième dispositif d'appui (136) sont réalisés comme des plaques en tôle ou des paquets de plaques en tôle.

8. Machine-outil selon l'une quelconque des revendications précédentes, **caractérisée en ce que** ledit au moins un dispositif de support (32) est accroché au dispositif de maintien (25) de manière à pouvoir se déplacer librement au-dessus du dispositif de palier (114) dans la direction de translation (128).

9. Machine-outil selon l'une quelconque des revendications précédentes, **caractérisée en ce qu'**un dispositif de mesure (176) servant à déterminer la position dudit au moins un dispositif de support (32) sur le trajet de translation est disposé sur le dispositif de maintien (25) et sur ledit au moins un dispositif de support (32), et en particulier **en ce que** le dispositif de mesure (176) est relié à un dispositif de commande (96) qui commande le dispositif d'ajustage (154).

10. Machine-outil selon l'une quelconque des revendications précédentes, **caractérisée en ce que** le dispositif d'ajustage (154) est réalisé dans la direction de translation (128) de manière rigide et/ou de manière autobloquante.

11. Machine-outil selon l'une quelconque des revendications précédentes, **caractérisée en ce que** le dispositif d'ajustage (154) présente au moins un cylindre de réglage (156) hydraulique ou pneumatique, et en particulier **en ce qu'**un dispositif de soupape (174) commandable et/ou réglable est associé audit au moins un cylindre de réglage (156), et en particulier **en ce qu'**un dispositif à piston (158) est disposé sur ledit au moins un dispositif de support (32), lequel dispositif à piston est doté d'une première surface de piston (160) associée à un premier espace de piston (162) et d'une deuxième surface de piston (164) associée à un deuxième espace de piston (166), et en particulier **en ce que** la position dudit au moins un dispositif de support (32), peut être ajustée par l'alimentation en fluide du premier espace de piston (162) et du deuxième espace de piston (166) au moyen d'un dispositif de soupape (174), et en particulier **en ce que** le premier espace de piston (162) et/ou le deuxième espace de piston (166) sont réalisés de manière à présenter une forme cylindrique et annulaire.

12. Machine-outil selon l'une quelconque des revendications précédentes, **caractérisée en ce qu'**un dispositif de centrage (148) destiné au montage dudit au moins un dispositif de support (32) est disposé sur le dispositif de maintien (25), et en particulier **en ce que** le dispositif de centrage (148) présente au moins un élément d'appui (150a, 150b, 150c), qui présente une surface d'appui (152) destinée audit au moins un dispositif de support (32), orientée de manière transversale par rapport à la direction de translation (128).

13. Machine-outil selon l'une quelconque des revendications précédentes, **caractérisée en ce que** le dispositif de maintien (25) est un chariot (24), qui est mobile de manière linéaire par rapport au châssis de machine (14), et/ou **en ce que** le dispositif de maintien (25) est maintenu sur un chariot (22), qui est mobile de manière linéaire par rapport au châssis de machine (14).

14. Machine-outil selon l'une quelconque des revendications précédentes, **caractérisée par** n dispositifs de support (32, 36) orientés les uns par rapport aux autres de manière parallèle, lesquels sont fixés sur le même dispositif de maintien (25), n étant égal au moins à deux et au moins (n-1) dispositifs de support (32) étant logés de manière flottante sur le dispositif de maintien (25).

15. Procédé servant à compenser des écarts d'une longueur d'outil d'une valeur de référence, dans le cadre duquel un dispositif de support (32 ; 36), qui maintient un outil, est positionné dans une direction de translation, de manière parallèle à la direction de l'écart de la valeur de référence de manière correspondante à l'écart, le dispositif de support (32, 36) étant logé de manière flottante sur un dispositif de maintien (25) dans la direction de translation, le dispositif de support (32 ; 36) étant accroché au dispositif de maintien (25) au-dessus du palier flottant, et la position de translation souhaitée du dispositif de support (32, 36) étant calée en calant le palier flottant.
